# EUROPÄISCHE PATENTANMELDUNG

(11) **EP 2 108 853 A2**
(43) Veröffentlichungstag der Anmeldung: **14.10.2009**
(21) Anmeldenummer: 09157882.3
(22) Anmeldetag: 14.04.2009
(51) Int. Cl.: F16B 37/06

(54) **Nietteil in einer Formvertiefung**

(30) Priorität: 11.04.2008 DE 102008018363; 14.07.2008 DE 102008033003; 15.10.2008 DE 102008051821
(71) Anmelder: Kerb-Konus-Vertriebs-GmbH, 92206 Amberg (DE)
(72) Erfinder: Hausmann, Johann, 92253 Schnaittenbach (DE); Viethen, Ulrich, 84184 Tiefenbach (DE)
(74) Vertreter: Cohausz & Florack

(57) **Zusammenfassung**

Nietteil, insbesondere Nietmutter, in einer Formvertiefung, umfassend ein Nietteil mit einem Grundkörper sowie einem zylindersymmetrischen und in Verlängerung des Grundkörpers verlaufenden Schaft, der eine im Wesentlichen glatte Außenwand eines ersten Durchmessers aufweist und von einem zylindersymmetrischen, endständigen Abschlussrand eines zweiten Durchmessers begrenzt wird; eine Formvertiefung in einem Flächenabschnitt eines mechanischen Bauteils, die mindestens einen verengten, insbesondere zylindersymmetrischen Bereich auf einer der Oberfläche des Bauteils zugewandten Seite aufweist, dessen effektiver Durchmesser einem dritten Durchmesser entspricht, und der um eine definierte erste Toleranz größer als der erste Durchmesser des Schaftes ist, sowie einen in Bezug auf die Oberfläche des Bauteils darunter liegenden Bereich, wobei das Nietteil in der Formvertiefung rotierbar gehalten ist, indem der Schaft von der Oberfläche des Bauteils in das Bauteil eingeführt ist und der endständige Abschlussrand in dem darunter liegenden Bereich des Bauteils aufgeweitet ist, so dass der zweite Durchmesser des zylindersymmetrischen Abschlussrandes im Wesentlichen größer ist als der dritte Durchmesser des verengten Bereiches des Bauteils.

## Beschreibung

Die Erfindung betrifft ein Nietteil, insbesondere eine Nietmutter und einen Nietstift, in einer Formvertiefung. Zudem betrifft die Erfindung ein Verfahren zur Herstellung eines Nietteils in einer Formvertiefung.

Nietteile werden im Folgenden im allgemeinen Sinne verstanden und sind nicht lediglich auf Ausführungsformen etwa von Nietmuttern oder Nietstiften beschränkt.

Nietteile werden typischerweise verwendet, um zwei oder mehrere Teile mechanisch miteinander zu verbinden, wobei etwa ein Verbindungsteil in eine entsprechend ausgebildete Aufnahme des Nietteils eingreift und eine mechanische Verbindung beider gewährleistet (alternativ kann natürlich auch das Nietteil in eine entsprechend Aufnahme des Verbindungsteiles eingreifen). Für gewöhnlich umfassen solche Verbindungsteile einen Verbindungsabschnitt, beispielsweise einen Gewindeabschnitt, welcher in einen entsprechenden Gegenverbindungsabschnitt, beispielsweise einen Gegengewindeabschnitt, welcher in der Aufnahme des Nietteils vorgesehen ist, eingefügt werden kann und somit eine feste mechanische Verbindung von Verbindungsteil und Nietteil ermöglicht.

Derartige mechanische Verbindungen sind bereits aus dem Stand der Technik bekannt. So offenbart etwa die DE 24 42 759 A1 ein Verbindungselement bestehend aus einer handelsüblichen Schraube und einer ein- oder mehrteiligen Hülsenmutter, wobei die Hülsenmutter an ihrem dem Schraubenkopf zugewandten Teil einen Ansatz mit Schlüsselflächen trägt. An dem dem Schraubenkopf abgewandten Teil weist die Hülsenmutter das übliche Mutterinnengewinde auf sowie in den dazwischen liegenden Hülsenmittelteil ist sie derart mit konstruktiven Mitteln geformt, dass beim Anziehen der Schraube bei gleichzeitigem Festhalten derselben das oder die Hülsenmittelteil(e) sich so stark aufwerfen, dass der nach dem Anziehen entstandene größte Außendurchmesser des Hülsenmittelstücks etwa 1,5 bis 2 mal größer als der ursprüngliche Außendurchmesser ist. Hierbei ist eine Stirn- bzw. Innenverzahnung vorgesehen, so dass die einzelnen Hülsenmutterteile gegen ein gegenseitiges Verdrehen gesichert sind.

Weiterhin ist beispielsweise aus der DD 216 075 A1 eine Nietmutter mit Verdrehsicherung zum formschlüssigen Eindrücken von mit Gewinde versehenen Befestigungselementen an Blechteilen bekannt. Hierbei besteht die Nietmutter aus einem angeprägten konisch geformten Sechskant, sowie einem konisch gebildeten Außendurchmesser und einer vom Außendurchmesser ebenfalls konisch in einem Winkel von 10° nach innen zum Sechskant verlaufenden Anlagenfläche.

Diese aus dem Stand der Technik bekannten Nietteile, werden dafür eingesetzt, eine Schraubenverbindung zwischen einer Schraube mit entsprechendem Außengewinde sowie einer dünnen Blechlage zu ermöglichen. Aufgrund des Vorsehens der in die dünne Blechlage einnietbaren Nietteile, bedarf es nicht des Einschneidens eines Innengewindes in beispielsweise eine Aufnahmeöffnung der dünnen Blechlage. Gerade da aufgrund der geringen Dicke derartiger Blechlagen die Bereitstellung eines Innengewindes in einer solchen Aufnahmeöffnung vielfach technisch unmöglich ist, bzw. den verlangten Halt nicht gewährleisten könnte, sind einnietbare Nietteile vielfach die einzige Möglichkeit, eine feste Schraubenverbindung mit derartigen dünnen Blechlagen zu ermöglichen.

Um jedoch eine feste Schraubenverbindung zwischen einem Verbindungsteil mit einem Schraubenaußengewinde sowie dem Nietteil mit einem Schraubeninnengewinde zu verwirklichen, muss das Verbindungsteil in das Nietteil entsprechend eingeschraubt werden. Diese Voraussetzung allein erfordert jedoch, dass das Verbindungsteil einerseits drehbar gehandhabt werden können muss, und andererseits, dass das Verbindungsteil mit so viel Kraft beaufschlagt werden kann, um ein mechanisches Einschrauben, bzw. Einfügen desselben in die Aufnahme des Nietteils zu erreichen.

Derartige Voraussetzungen können jedoch aus konstruktionstechnischen Gründen von zahlreichen Verbindungsteilen und bereits vernieteten Nietteilen nicht erfüllt werden. So ist es beispielsweise nicht selten der Fall, dass aufgrund einer entsprechenden Formgebung des Verbindungsteils dieses keine geeignete Angriffsfläche zur Kraftübertragung aufweist. Das Zusammenwirken mit einem Werkzeug zum Einfügen des Verbindungsteiles in das Nietteil kann folglich unmöglich oder nur unter Verwendung von Spezialwerkzeugen möglich sein. Weiterhin ist es auch nicht selten der Fall, dass die beschriebene Verbindung zwischen Verbindungsteil und Aufnahme des Nietteils durch ein zu geringes Platzangebot nicht in technisch sinnvoller Weise erfolgen kann.

Wie aus den obigen Beschreibungen der aus dem Stande der Technik bekannten Nietteile zu entnehmen ist, existiert folglich eine technische Notwendigkeit, ein Nietteil in einer Formvertiefung vorzuschlagen, welche die aufgezeigten Nachteile der Vorrichtungen des Standes der Technik vermeidet. Insbesondere ist es Aufgabe der vorliegenden Erfindung, ein mit einem Bauteil verbindbares Nietteil vorzuschlagen, welches erlaubt, ein Verbindungsteil auch dann in das Nietteil einzufügen und mit diesem verbinden zu können, wenn das Verbindungsteil selbst nicht drehbar gehandhabt werden kann.

Diese Aufgabe wird durch ein Nietteil in einer Formvertiefung gemäß Patentanspruch 1, 22, 27 sowie 29, als auch durch ein Verfahren zur Herstellung eines Nietteiles in einer Formvertiefung gemäß Patentanspruch 23 gelöst.

Insbesondere wird die Aufgabe durch ein Nietteil, insbesondere eine Nietmutter, in einer Formvertiefung gelöst, welche Folgendes umfasst: ein Nietteil mit einem Grundkörper sowie einem zylindersymmetrischen und in Verlängerung des Grundkörpers verlaufenden Schaft, der eine im Wesentlichen glatte Außenwand eines ersten Durchmessers aufweist und von einem zylindersymmetrischen, endständigen Abschlussrand eines zweiten Durchmessers begrenzt wird; eine Formvertiefung in einem Flächenabschnitt eines mechanischen Bauteils, die mindestens einen verengten, insbesondere zylindersymmetrischen Bereich auf einer der Oberfläche des Bauteils zugewandten Seite aufweist, dessen effektiver Durchmesser einem dritten Durchmesser entspricht und der um eine definierte erste Toleranz größer als der erste Durchmesser des Schaftes ist, sowie einen in Bezug auf die Oberfläche des Bauteils darunterliegenden Bereich, wobei das Nietteil in der Formvertiefung rotierbar gehalten ist, indem der Schaft von der Oberfläche des Bauteils in das Bauteil eingeführt ist und der endständige Abschlussrand in dem darunterliegenden Bereich des Bauteils aufgeweitet ist, so dass der zweite Durchmesser des zylindersymmetrischen Abschlussrandes im Wesentlichen größer ist als der dritte Durchmesser des verengten Bereiches des Bauteils.

Weiterhin wird die Aufgabe gelöst durch ein Nietteil, insbesondere eine Nietmuter, in einer Formvertiefung, welches folgendermaßen erhalten wird: Bereitstellen eines Nietteiles mit einem Grundkörper sowie einem zylindersymmetrischen und in Verlängerung des Grundkörpers verlaufenden Schaft, der eine im Wesentlichen glatte Außenwand eines ersten Durchmessers aufweist und von einem zylindersymmetrischen, endständigen Abschlussrand eines zweiten Durchmessers begrenzt wird; Bereitstellen eines mechanischen Bauteils mit einer Formvertiefung in einem Flächenabschnitt, die mindestens einen verengten, insbesondere zylindersymmetrischen Bereich auf einer der Oberfläche des Bauteils zugewandten Seite aufweist, dessen effektiver Durchmesser einem dritten Durchmesser entspricht und der um eine definierte erste Toleranz größer als der erste Durchmesser des Schaftes ist, sowie einen in Bezug auf die Oberfläche des Bauteils darunter liegenden Bereich umfasst; Einführen des Schaftes von der Oberfläche des Bauteils in das Bauteil wobei der endständige Abschlussrand in dem darunterliegenden Bereich des Bauteils angeordnet ist; Aufweiten des endständigen Abschlussrandes in dem darunterliegenden Bereich mit einem Nietwerkzeug mit im Wesentlichen zylindersymmetrischem Werkzeugteil derart, dass der zweite Durchmesser des zylindersymmetrischen Abschlussrandes im Wesentlichen größer ist als der dritte Durchmesser des verengten Bereiches, und dass das Nietteil in der Formvertiefung rotierbar gehalten ist.

Fernerhin wird die Aufgabe auch noch gelöst durch ein Nietteil in einer Formvertiefung, welches folgende Merkmale aufweist: ein Nietteil mit einem Grundkörper sowie einem zylindersymmetrischen und in Verlängerung des Grundkörpers verlaufenden Schaft, der eine im Wesentlichen glatte Außenwand eines ersten Durchmessers aufweist und von einem zylindersymmetrischen, endständigen Abschlussrand eines zweiten Durchmessers begrenzt wird, welcher Verankerungsmittel aufweist; eine Formvertiefung in einem Flächenabschnitt eines mechanischen Bauteils, die mindestens einen verengten, insbesondere zylindersymmetrischen Bereich auf einer der Oberfläche des Bauteils zugewandten Seite aufweist, dessen effektiver Durchmesser einem dritten Durchmesser entspricht, und der um eine definierte erste Toleranz größer als der erste Durchmesser des Schaftes ist, sowie einen in Bezug auf die Oberfläche des Bauteils darunter liegenden Bereich, wobei das Nietteil in der Formvertiefung rotierbar gehalten ist, indem der Schaft von der Oberfläche des Bauteils in das Bauteil eingeführt ist und die Verankerungsmittel des endständige Abschlussrandes in dem darunter liegenden Bereich des Bauteils mit entsprechenden Gegenverankerungsmittel in Eingriff gebracht werden, wobei die Gegenverankerungsmittel eine Ausdehnung im Wesentlichen parallel zur Ausdehnung des Flächenabschnittes aufweisen, die im Wesentlichen größer ist als der dritte Durchmesser des verengten Bereiches des Bauteils.

Weiter wird die Aufgabe auch gelöst durch ein Nietteil, insbesondere einen Nietstift, in einer Formvertiefung, welches die folgenden Merkmale aufweist: ein Nietteil mit einem Grundkörper sowie einem zylindersymmetrischen und in Verlängerung des Grundkörpers verlaufenden Schaft, der eine im Wesentlichen glatte Außenwand eines ersten Durchmessers aufweist und von einem zylindersymmetrischen, endständigen Abschlussrand eines zweiten Durchmessers begrenzt wird, wobei der Grundkörper und/oder der Schaft einen Aufnahmebereich aufweist, in welchem eine stiftförmige Befestigungsvorrichtung vorgesehen ist; eine Formvertiefung in einem Flächenabschnitt eines mechanischen Bauteils, die mindestens einen verengten, insbesondere zylindersymmetrischen Bereich auf einer der Oberfläche des Bauteils zugewandten Seite aufweist, dessen effektiver Durchmesser einem dritten Durchmesser entspricht, und der um eine definierte erste Toleranz größer als der erste Durchmesser des Schaftes ist, sowie einen in Bezug auf die Oberfläche des Bauteils darunter liegenden Bereich, wobei das Nietteil in der Formvertiefung rotierbar gehalten ist, indem der Schaft von der Oberfläche des Bauteils in das Bauteil eingeführt ist und der endständige Abschlussrand in dem darunter liegenden Bereich des Bauteils aufgeweitet ist, so dass der zweite Durchmesser des zylindersymmetrischen Abschlussrandes im Wesentlichen größer ist als der dritte Durchmesser des verengten Bereiches des Bauteils.

Überdies wird die Aufgabe durch ein Verfahren zur Herstellung eines Nietteils, insbesondere einer Nietmutter, in einer Formvertiefung gelöst, welches folgende Schritte aufweist: Bereitstellen eines Nietteils mit einem Grundkörper sowie einem zylindersymmetrischen und in Verlängerung des Grundkörpers verlaufenden Schaft, der eine im Wesentlichen glatte Außenwand eines ersten Durchmessers aufweist und von einem zylindersymmetrischen endständigen Abschlussrand eines zweiten Durchmessers begrenzt wird; Bereitstellen eines mechanischen Bauteils mit einer Formvertiefung in einem Flächenabschnitt, die mindestens einen verengten insbesondere zylindersymmetrischen Bereich auf einer der Oberfläche des Bauteils zugewandten Seite aufweist, dessen effektiver Durchmesser einem dritten Durchmesser entspricht, und der um eine definierte erste Toleranz größer als der erste Durchmesser D1 des Schaftes ist, sowie einen im Bezug auf die Oberfläche des Bauteils darunterliegenden Bereich umfasst; Einführen des Schaftes von der Oberfläche des Bauteils in das Bauteil, wobei der endständige Abschlussrand in dem darunterliegenden Bereich des Bauteils angeordnet ist; Aufweiten des endständigen Abschlussrandes in dem darunterliegenden Bereich mit einem Nietwerkzeug mit im Wesentlichen zylindersymmetrischem Werkzeugteil derart, dass der zweite Durchmesser des zylindersymmetrischen Abschlussrandes im Wesentlichen größer ist als der dritte Durchmesser des verengten Bereiches, und dass das Nietteil in der Formvertiefung rotierbar gehalten ist.

Ein wesentlicher Punkt der Erfindung liegt darin, dass das Nietteil in der Formvertiefung rotierbar gehalten ist. Hierbei ist der Schaft des Nietteils derart in die Formvertiefung eines mechanischen Bauteils eingefügt, dass eine Rotation um eine typischerweise der Längssymmetrieachse des zylindersymmetrischen Schaftes entsprechende Achse ausgeführt werden kann. Der in Bezug auf den Schaft endständige Abschlussrand ist dabei so weit aufgeweitet, dass das Nietteil nicht aus der Formvertiefung ohne Aufwendung einer großen Kraft entfernt werden kann. Soll nun ein weiteres Verbindungsteil mit dem Nietteil bzw. einer entsprechenden Aufnahme des Nietteiles verbunden werden, so kann die Verbindung, falls diese typischerweise eine drehende Bewegung des Verbindungsteils regelmäßig erfordert, vorliegend dadurch erreicht werden, dass das Verbindungsteil mit dem Nietteil bzw. der Aufnahme des Nietteils entsprechend in kraftschlüssigen Kontakt gebracht wird und das Nietteil selbst in der Formvertiefung rotiert wird, wobei das Verbindungsteil eingefügt wird. Soll diese Verbindung mittels eines Schraubengewindes bzw. eines Bajonettverschlusses erreicht werden, so bedarf es also nur der mechanischen Drehbewegung des Nietteils in der Formvertiefung und nicht des Verbindungsteiles selbst, um ein Eindrehen des Verbindungsteiles in das Nietteil bzw. eine dafür vorgesehene Aufnahme zu erreichen.

In einer vorteilhaften Ausführungsform der vorliegenden Erfindung kann vorgesehen sein, dass der Schaft des Nietteils in den verengten, insbesondere zylindersymmetrischen Bereich der Formvertiefung formschlüssig eingreift. Der formschlüssige Eingriff gewährleistet dabei einerseits eine weitgehend gleichmäßigen Rotation des Nietteils in der Formvertiefung, andererseits kann auch ein Wackeln des Nietteils in der Formvertiefung, auch wenn dieses nicht rotiert wird, vermieden werden. Folglich wird die mechanische Stabilität der Verbindung von Nietteil und Formvertiefung erhöht. Hierbei ist auch anzumerken, dass ein formschlüssiger Eingriff nicht dem Vorliegen der ersten Toleranz zwischen dem mindestens einen verengten Bereich auf der Oberfläche des Bauteils und dem ersten Durchmesser des Schaftes widerspricht. Formschlüssig bedeutet vorliegend lediglich das Eingreifen des Schaftes in den mindestens einen verengten Bereich auf der Oberfläche des Bauteils so, dass trotz mechanisch stabiler halternder Verbindung von Nietteil und Formvertiefung eine weitgehend ungehinderte Rotation des Nietteils in der Formvertiefung erfolgen kann.

In einer anderen Ausführungsform der vorliegenden Erfindung kann vorgesehen sein, dass das Bauteil aus Kunststoff, insbesondere aus Bakelit, oder aus einem glasfaser- oder kohlefaserverstärkten Material, oder aus Metall, insbesondere aus Stahl ist. Derartige Materialien gewährleisten einen mechanisch stabilen Halt des Nietteils in der Formvertiefung während die Abnutzungseigenschaften, auch bei verhäufter Rotation des Nietteils in der Formvertiefung, über einen relativ langen Zeitraum gewährleistet werden kann. Weiterhin weisen diese Materialen einen relativ geringen Reibungsquotienten auf, welcher gewährleistet, dass eine Rotation des Nietteils in der Formvertiefung weitgehend reibungsarm erfolgt.

In einer besonders vorteilhaften Ausführungsform der vorliegenden Erfindung kann vorgesehen sein, dass die Formvertiefung eine Aussparung, insbesondere eine Bohrung in einem plattenförmigen Bauteil ist. Unabhängig von der Dicke dieses plattenförmigen Bauteils, kann folglich eine Verbindung zwischen der in der als Aussparung, insbesondere als Bohrung ausgeführte Formvertiefung aufgenommenes Nietteil mit einem nicht weiter ausgeführten Verbindungsteil gewährleistet werden. Überdies ist die Formvertiefung in einem technisch leicht zu kontrollierenden und üblichen Verfahren herstellbar.

In einer weiter bevorzugten Ausführungsform des Nietteils in einer Formvertiefung kann vorgesehen sein, dass der in Bezug auf die Oberfläche des Bauteils unter dem verengten, insbesondere zylindersymmetrischen Bereich liegende Bereich einen effektiven vierten Durchmesser aufweist, der größer als der effektive dritte Durchmesser des verengten, insbesondere zylindersymmetrischen Bereiches ist, wobei der zylindersymmetrische Abschlussrand des Nietteils in diesen Bereich eingreift. Der unter dem verengten, insbesondere zylindersymmetrischen Bereich liegende Bereich ist dabei typischerweise mit dem verengten Bereich über eine durchgehende, geformte Wandung verbunden. Entsprechend der Ausführungsformen der Wandungen des unter dem verengten, insbesondere zylindersymmetrischen Bereich liegenden Bereichs vermögen diese eine Aufweitung zu definieren, in welcher der zylindersymmetrische Abschlussrand des Nietteils im Wesentlichen angeordnet ist. Typische Ausführungsformen der Wandungen definieren beispielsweise Schrägungen, Rundungen oder Stufungen. Die Wandungen können auch so ausgeformt sein, dass sie die Aufweitung des zylindersymmetrischen Abschlussrandes des Nietteils nachformen, ohne mit diesem dabei jedoch in ständiger mechanischer Wechselwirkung stehen zu müssen. Ebenso kann dieser unter dem verengten, insbesondere zylindersymmetrischen Bereich liegende Bereich zusammen mit dem zylindersymmetrischen Abschlussrand des Nietteils zwei gegeneinander gleitende Rotationsflächen definieren. Folglich vermag der unter dem verengten, insbesondere zylindersymmetrischen Bereich liegende Bereich die mechanische Stabilität des Verbundes aus Nietteil und Formvertiefung sowie den Gleichlauf bei Rotation des Nietteils noch weiter zu erhöhen.

In einer weiterführenden Ausführungsform kann vorgesehen sein, dass der zylindersymmetrische Abschlussrand des Nietteils in die der Oberfläche des plattenförmigen Bauteils abgewandte Fläche nicht übersteht. Folglich kann das Nietteil auch dann als Verbindungselement vorgesehen werden, wenn auf der der Oberfläche des plattenförmigen Bauteils abgewandten Fläche Einschränkungen im Hinblick auf den dort verfügbaren Raum bestehen. Zudem vermindert das Vermeiden eines Überstandes des Nietteils auf der der Oberfläche des plattenförmigen Bauteils abgewandten Fläche das Verletzungsrisiko für einen Benutzer, welcher mit den Flächenabschnitten der abgewandten Fläche in Kontakt kommt.

Überdies kann vorgesehen sein, dass der unter dem verengten, insbesondere zylindersymmetrischen Bereich liegende Bereich eine Schrägung oder Rundung in Bezug auf die Oberfläche des Bauteils aufweist. Durch das Vorsehen einer Schrägung bzw. einer Rundung in dem unter dem verengten, insbesondere zylindersymmetrischen Bereich liegenden Bereich können etwa die in diesem Bereich ausgebildeten mechanischen Reibeflächen zur Reibung mit dem zylindersymmetrischen, endständigen Abschlussrand des Nietteils derart ausgeformt sein, dass die Gesamtreibung bei Rotation des Nietteils in der Formvertiefung unter Beibehaltung einer hohen Gesamtstabilität der Verbindung aus Nietteil und Formvertiefung gewährleistet werden kann.

In einer weiterhin bevorzugten Ausführungsform der vorliegenden Erfindung kann der endständige Abschlussrand in dem unter dem verengten, insbesondere zylindersymmetrischen Bereich liegenden Bereich des Bauteils durch ein Nietwerkzeug mit im Wesentlichen zylindersymmetrischen Werkzeugteil weggesteuert und/oder kraftgesteuert aufgeweitet sein. Bei der weggesteuerten Aufweitung bemisst das Nietwerkzeug mit dem im Wesentlichen zylindersymmetrischen Werkzeugteil die Wegstrecke, mit welcher das Werkzeugteil typischerweise entlang der Symmetrielängsachse des zylindersymmetrischen Schaftes in diesen unter Beaufschlagung des zylindersymmetrischen endständigen Abschlussrandes mit einer Kraft eingeführt wird, um den Abschlussrand aufzuweiten. Bei der kraftgesteuerten Aufweitung wird entsprechend nicht die Wegstrecke des Werkzeugteils sondern der zeitliche Verlauf der Kraftaufwendung betrachtet. Es sind aber auch Kombinationen einer Kraft- bzw. Wegsteuerung denkbar. Insbesondere kann bei einer prinzipiellen Wegsteuerung der Vortrieb dann eingestellt werden, wenn ein vorbestimmter Grenzwert für die Kraft, wobei dieser Grenzwert entweder konstant oder ebenfalls wegabhängig sein kann, überschritten wird. Alternativ kann die Kraftsteuerung auch wegabhängig sein.

Durch die Wegsteuerung lässt sich folglich der Grad der Aufweitung des zylindersymmetrischen, endständigen Abschlussrandes bemessen, welche einerseits die Stabilität der Verbindung des Nietteils mit der Formvertiefung bestimmt, und andererseits die Rotationseigenschaften des zylindersymmetrischen Schaftes in der Formvertiefung definiert. So kann beispielsweise bei zu geringer Aufweitung des Abschlussrandes das Nietteil in der Formvertiefung keinen ausreichend mechanisch stabilen Halt ermöglichen, und kann zudem ein mechanisches Entgleiten des Nietteils aus der Formvertiefung zulassen. Im Gegensatz hierzu kann ein entsprechend zu stark aufgeweiteter Abschlussrand die Rotationsfähigkeit des Nietteils in der Formvertiefung beeinträchtigen. Alternativ zu der weggesteuerten Aufweitung des Abschlussrandes des Nietteils kann auch ein zeitgesteuertes Verfahren angewendet werden, in welchem bei etwa vordefiniertem Druck auf den zylindersymmetrischen, endständigen Abschlussrand des Nietteils durch das Werkzeugteil über einen vorbestimmten definierten Zeitraum der Grad der Aufweitung des Abschlussrandes bestimmt werden.

In einer weiterführenden Ausführungsform der vorliegenden Erfindung kann der endständige Abschlussrand mit dem Bereich des Bauteils mit dem effektiven vierten Durchmesser derart aufgeweitet sein, dass der zylindersymmetrische Abschlussrand im Wesentlichen formschlüssig in den in Bezug auf die Oberfläche des Bauteils darunterliegenden Bereiches des Bauteils unter Beibehaltung einer zweiten Toleranz eingreift. Die Formschlüssigkeit gewährleistet hierbei einerseits einen guten Halt des Nietteils in der Formvertiefung, andererseits auch die Bereitstellung maximal großer Gleitflächen bei Rotation des Nietteils in der Formvertiefung. Damit überträgt sich die an dem Nietteil in der Formvertiefung angreifende Last, bzw. Kraft auf einen größtmöglichen Gleitbereich zwischen der Außenwand des Schaftes sowie dem endständigen Abschlussrand einerseits und dem mindestens einen verengten Bereich des Bauteils sowie dem darunterliegenden Bereich des Bauteils andererseits. Die Maximierung der gesamten Gleitfläche bei Rotation des Nietteils in der Formvertiefung erlaubt somit eine gute Verteilung der auf das Nietteil einwirkenden Kräfte als auch andererseits eine geringe oder gleichmäßige Abnutzung des Formvertiefungsmaterials als auch des Nietteilmaterials. Hierbei ist anzuführen, dass das Nietteil typischerweise aus Metall gefertigt ist, wobei gehärtete Metalle, wie gehärtete Stähle oder Schraubenstähle besonders gut geeignet sind.

In einer weiterhin bevorzugten Ausführungsform der vorliegenden Erfindung kann die Außenwand des Schaftes und/oder die Formvertiefung des Bauteils oberflächenbehandelt sein, um ein verbessertes Rotieren des Nietteils in der Formvertiefung des Bauteils zu ermöglichen. Die Oberflächenbehandlung vermag hierbei eine Härtung des Materials zu umfassen, welche eine Reduzierung der Haftreibungs- sowie Gleitreibungsverluste bei Rotation des Nietteils in der Formvertiefung bewirken. Andererseits kann die Oberflächenbehandlung auch durch eine Glättung der Außenwand des Schaftes und/oder der Wandungen der Formvertiefung des Bauteils umfassen, welche ebenso die Reibungsverluste bei Rotation des Nietteils in der Formvertiefung vermindern können. Dementsprechend kann die Oberflächenbehandlung auch noch eine Rotation des Nietteils in der Formvertiefung erlauben, auch wenn auf dieses große äußere Kräfte einwirken.

In einer besonders bevorzugten Ausführungsform des Nietteils in einer Formvertiefung kann der Grundkörper des Nietteils ein Schraubeninnengewinde aufweisen. Das Schraubeninnengewinde kann sich ausführungsgemäß auch noch auf den zylindersymmetrischen Schaft bzw. Teilabschnitte des zylindersymmetrischen Schaftes erstrecken. Folglich kann eine Schraubenverbindung zwischen einem Verbindungsteil mit Schraubenaußengewinde und dem Schraubeninnengewinde des Nietteils hergestellt werden. Alternativ zu einer Schraubverbindung ist auch eine Bajonett- sowie eine Steck- oder Schraubsteckverbindung möglich. Folglich weist der Grundkörper des Nietteils, bzw. auch Teilabschnitte des Schaftes, entsprechende Gewindeanschlüsse bzw. Gegengewindeanschlüsse auf. Im Allgemeinen sind ausführungsgemäß alle industrieüblichen Verbindungssysteme, welche zur Herbeiführung der Verbindung eine Drehbewegung erfordern, vorliegend beansprucht.

In einer anderen Ausführungsform kann der Grundkörper des Nietteils an den Übergangsbereich zwischen dem Grundkörper und dem Schaft eine der Oberfläche des Bauteils zugewandte erste Auflagefläche aufweisen. Diese Auflagefläche gewährleistet einerseits die stabile Verbindung von Nietteil und Formvertiefung, und verhindert ein unbeabsichtigtes Durchführen des Nietteils durch die Formvertiefung hin zu der der Oberfläche des Bauteils abgewandten Seite. Andererseits stellt die erste Auflagefläche auch bei Rotation des Nietteils in der Formvertiefung eine Gleitfläche zusammen mit Teilabschnitten der Oberfläche des Bauteils dar, und kann folglich zu einer gleichmäßigen Rotation des Nietteils in der Formvertiefung beitragen.

In einer weiterführenden Ausführungsform des Nietteils in einer Formvertiefung kann die erste Auflagefläche des Grundkörpers des Nietteilsoberflächenbehandelt sein, um ein verbessertes Rotieren des Nietteils in der Formvertiefung des Bauteils zu ermöglichen. Die Oberflächenbehandlung erstreckt sich dabei wiederum nicht ausschließlich auf die erste Auflagefläche des Grundkörpers des Nietteils, sondern kann auch Teilabschnitte der Oberfläche des Bauteils betreffen. Die Oberflächenbehandlung kann wiederum in einer Härtung der bei der Rotation des Nietteils in der Formvertiefung beanspruchten Gleitflächenabschnitte bestehen, oder aber auch in einer Glättung dieser bezeichneten Flächenabschnitte. Auch eine Oberflächenbeschichtung der bei der Rotation mit Reibekräften beaufschlagten Flächen kann vorgesehen sein.

In einer anderen Ausführungsform der vorliegenden Erfindung kann der Grundkörper des Nietteilseinen nicht rotationssymmetrischen Außenrand aufweisen. Das Vorsehen eines rotationssymmetrischen Außenrandes des Grundkörpers des Nietteils erlaubt beispielsweise das Drehen des Nietteils mittels Werkzeugen, welche einen an den nicht rotationssymmetrischen Außenrand angepassten Bearbeitungsabschnitt aufweisen. Beispielsweise kann ein Grundkörper mit einem elliptischen Außenrand mit einem Bearbeitungswerkzeug drehend etwa zur Herstellung einer Verbindung zwischen dem Nietteil und einem weiteren nicht weiter bezeichneten Verbindungsteil erreicht werden, wenn das Bearbeitungswerkzeug einen invers-elliptisch geformten Bearbeitungsabschnitt aufweist. Folglich ist es möglich, das Nietteil, das weitgehend beliebige Außenrandformen aufweisen kann, gemäß des Erfindungssinnes auch mittels weiterer Werkzeuge (Bearbeitungswerkzeuge) in der Formvertiefung zu rotieren.

Nach einer weiterhin bevorzugten Ausführungsform der vorliegenden Erfindung kann der Grundkörper des Nietteils einen sechskantig geformten Außenrand aufweisen. Folglich wird die Bearbeitung bzw. Rotation des Nietteils in der Formvertiefung mittels handels- und industrieüblicher Sechskantschlüssel der entsprechenden Größen ermöglicht.

In einer weiteren Ausführungsform des Nietteils in einer Formvertiefung kann der Grundkörper des Nietteils eine von der Oberfläche des Bauteils abgewandte zweite Auflagefläche als Anstoßfläche für ein Werkzeug aufweisen. Dieses Werkzeug kann sowohl ein Bearbeitungswerkzeug zur Drehung bzw. Rotation des Nietteils in der Formvertiefung sein, als auch ein Nietwerkzeug, zur Aufweitung des Abschlussrandes und Herstellung einer halternden Verbindung zwischen Nietteil und Formvertiefung. Das Vorsehen einer zweiten Auflagefläche als Anstoßfläche erleichtert die Justierung bzw. die kraftschlüssige Kontaktierung des Werkzeugs in Bezug auf den Grundkörper der Nietmutter. Eine Bearbeitung durch das Werkzeug wird folglich nicht nur erleichtert, sondern auch bezüglich seiner Präzision erhöht.

In einer weiterführenden Ausführungsform des Nietteils in einer Formvertiefung kann die Wanddicke des Schaftes weniger als 1 mm, insbesondere zwischen 0,2 mm und 0,8 mm sein. Eine derartige Wanddicke gewährleistet sowohl einen soliden mechanischen Halt des Nietteils in der Formvertiefung, als auch die problemlose Bearbeitung des Nietteils, beispielsweise mit einem hydraulischen Nietwerkzeug.

Weiterhin kann vorgesehen sein, dass der endständige Abschlussrand des Nietteils eine auf der Außenseite vorgesehene Abschrägung/Abrundung aufweist, welche das Einfügen des Nietteils in die Formvertiefung des Bauteils erleichtert. Dementsprechend können auch bei der Verarbeitung hoher Stückzahlen von Nietteile die Einfügung dieser in die Formvertiefungen eines oder mehrerer Bauteile ohne das Auftreten von mechanischen Passproblemen eingefügt werden. Das Vorsehen einer an der Außenseite des endständigen Abschlussrandes des Nietteilsvorgesehenen Abschrägung/Abrundung ist insbesondere dann vorteilhaft, wenn der Durchmesser des zylindersymmetrischen Abschlussrandes weitgehend mit der Verengung des verengten Bereiches der Formvertiefung übereinstimmt.

Zudem ist in einer Ausführungsform vorgesehen, dass das Nietteil eine elektrisch leitende Beschichtung zur Erhöhung der Leitfähigkeit des Nietteil auf vorbestimmten Oberflächenabschnitten aufweist. Folglich wird der Übergangswiderstand verringert, wenn die vorbestimmten Oberflächenabschnitte zur Stromleitung mit weiteren Leiterabschnitten in Kontakt gebracht werden. Die weiteren Leiterabschnitte können auch der Flächenabschnitt des mechanischen Bauteils selbst sein. Dementsprechend wird eine elektrische Stromverbindung zwischen dem elektrisch leitenden Flächenabschnitt und des Nietteils über elektrische Kontaktstellen am Grundkörper, am Schaft oder auch am Abschlussrand des Nietteils erzeugt. Werden die Kontaktstellen auf dem Nietteil zur Erhöhung der Leitfähigkeit mit einer gut elektrisch leitenden Beschichtung, beispielsweise mit einer Edelmetall- oder Edelmetalllegierungsbeschichtungen, versehen, resultiert ein besseres Leitungsverhalten mit geringerer Verlustleistung. Solche Beschichtungen können bevorzugt auch in Verbindung mit einer Verliersicherung des Nietteils vorgesehen sein.

In einer weiteren Ausführungsform des Nietteils in einer Formvertiefung ist überdies vorgesehen, dass das Nietteil wenigstens ein elektrisch nichtleitendes oder elektrisch schlecht leitendes Material umfasst, um Spannungsüberschläge über vorbestimmte Oberflächenabschnitte zu verhindern. Derartig nicht leitende oder schlecht leitende Materialien sind beispielsweise Kunststoffe oder Halbmetalle, insbesondere kortiertes Aluminium. Alternativ hierzu können auch oberflächliche Beschichtungen des Nietteils aus nichtleitenden oder schlecht leitenden Materialien vorgesehen sein. In einer besonders bevorzugten Ausführungsform umfasst das Nietteil einen Gewindeeinsatz, welcher zur Verhinderung von Spannungsüberschlägen ein elektrisch nichtleitendes oder elektrisch schlecht leitendes Material umfasst.

Fernerhin kann sich das Nietteil in einer Formvertiefung auch dadurch auszeichnen, dass der zylindersymmetrische Schaft und/oder der endständige Abschlussrand, wenigstens einen Schlitz und/oder wenigstens eine Kerbe aufweist. Dadurch resultiert eine Verringerung der auftretenden Fügekräfte beim Einfügen des Nietteils in die Formvertiefung.

In einer anderen Ausführungsform eines Nietteils in einer Formvertiefung ist vorgesehen, dass die Gegenverankerungsmittel mit den Verankerungsmitteln klemmend, mittels einer Schraubverbindung, klebend oder mittels einer Schweißverbindung verbunden sind. Insbesondere kann die Verbindung von Verankerungsmitteln und Gegenverankerungsmitteln eine lösbare oder auch eine nicht lösbare Verbindung sein. Durch Vorsehen von industrieüblichen Verbindungen, wie den oben beschriebenen, kann ein einfaches und kostengünstiges Nietteil in einer Formvertiefung hergestellt werden.

Fernerhin ist möglich, dass die stiftförmige Befestigungsvorrichtung in dem Aufnahmebereich mit dem Nietteil fest verbunden, insbesondere verpresst, ist. Dadurch kann bereits vor dem Einfügen des Nietteils in die Formvertiefung eine zuverlässige Verbindung von Nietteil und stiftförmiger Befestigungsvorrichtung erreicht werden, ohne dass weitere Arbeitsschritte danach nötig werden. Die Verbindung kann durch Verschrauben, Verpressen, Verschweißen oder durch andere industrieübliche Verfahren erfolgen. Das stiftförmige Befestigungsmittel steht im Anschluss zum Einfügen des Nietteils in die Formvertiefung zur weiteren Verarbeitung zur Verfügung, wobei das stiftförmige Befestigungsmittel zusammen mit dem Nietteil in der Formvertiefung rotierbar gehalten wird. Insbesondere ist das stiftförmige Befestigungsmittel eine Schraube oder ein schraubenähnliches Mittel.

Alternativ kann auch vorgesehen sein, dass die stiftförmige Befestigungsvorrichtung in dem Aufnahmebereich mit des Nietteils durch eine klebende oder klemmende Haltesicherung verbunden ist. Eine solche Haltesicherung kann in dem Fall etwa, dass das stiftförmige Befestigungsmittel eine Schraube ist, auch als Ausdrehsicherung ausgebildet sein, welche verhindert, dass eine in das Nietteil bereits zu einem vorhergehenden Zeitpunkt eingefügte Schraube in nachfolgenden Verarbeitungsschritten nicht aus dem Nietteil unbeabsichtigt herausgedreht werden kann. Eine Haltesicherung wie auch die Ausdrehsicherung im speziellen kann als Kunststoffbeschichtung, die beispielsweise ringförmig oder teilweise ringförmig um die stiftförmige Befestigungsvorrichtung angeordnet ist, ausgeführt sein, die eine klemmende Befestigung der stiftförmigen Befestigungsvorrichtung in das des Nietteil gewährleistet. Die Befestigung kann nach erfolgtem Einsetzen des Nietteils in die Formvertiefung durch Aufwenden eines entsprechenden Drehmomentes auf die stiftförmige Befestigungsvorrichtung gelöst werden, wenn das Nietteil, im Verhältnis zur stiftförmige Befestigungsvorrichtung unbeweglich gehalten wird. Danach steht die stiftförmige Befestigungsvorrichtung zur weiteren Verwendung zur Verfügung.

Überdies kann auch in einer Weiterführung des Verfahrens zur Herstellung eines Nietteils in einer Formvertiefung der endständige Abschlussrand in dem Bereich des Bauteils durch das Nietwerkzeug mit im Wesentlichen zylindersymmetrischem Werkzeugteil weggesteuert und/oder kraftgesteuert aufgeweitet werden. Die weggesteuerte wie die kraftgesteuerte Aufweitung ermöglicht, wie bereits oben ausgeführt, die kontrollierte Aufweitung des Abschlussrandes des Nietteils, so dass sowohl eine solide Halterung des Nietteils in der Formvertiefung gewährleistet sein kann, als auch eine freie oder gute Rotierbarkeit des Nietteils in der Formvertiefung möglich ist.

In einer anderen Ausführungsform des Verfahrens zur Herstellung des Nietteils in einer Formvertiefung ist vorgesehen, dass das Nietteil mittels eines Fügewerkzeugs prozesssicher in die Formvertiefung eingesetzt wird. Das Fügewerkzeug kann hierbei ein Fügewerkzeug mit Anschlagbund sein, welches ein noch präziseres und sicheres Einsetzen des Nietteils in die Formvertiefung erlaubt.

In einer weitern Ausführungsform des Verfahrens zur Herstellung des Nietteils in einer Formvertiefung ist vorgesehen, dass vor Einführen des Schaftes in das Bauteil der Schaft und/oder der Abschlussrand mit einer Verdrehsicherung versehen werden, die die Rotierbarkeit des Nietteils in der Formvertiefung zeitweilig unterbindet. Eine derartige Verdrehsicherung kann auch als Verliersicherung ausgeführt sein, welche ein Verlieren des Nietteils aus der Formvertiefung noch vor dem Aufweiten des Abschlussrandes vermeidet. Zudem kann die Verdrehsicherung sich auch noch nach dem Aufweiten als vorteilhaft erweisen, wenn etwa die die zeitweilige Unterbindung der Rotierbarkeit ein erleichtertes Einfügen weiterer Bauelemente in das Nietteil oder eine weiteres Verwendung des Nietteils bewirkt. Wird das Nietteil zu einem späteren gewünschten Zeitpunkt mit einem entsprechenden Drehmoment beaufschlagt, wird die Verdrehsicherung gelöst oder sogar vollständig zerstört, und die Rotierbarkeit kann wieder hergestellt werden. Weiterhin ist es möglich, dass durch gezieltes Aufweiten des Abschlussrandes bzw. des Schaftes die Gängigkeit der Rotierbarkeit kontrolliert werden kann, indem die Aufweitung soweit erfolgt, dass die Reibungskraft zwischen den Kontaktflächen des Schaftes und/oder des Abschlussrandes sowie denen der Formvertiefung gerade so groß sind, dass ein Rotieren unter Überwindung einer vorbestimmten Kontaktreibungskraft möglich ist. Durch übermäßiges Aufweiten wird die Kontaktreibungskraft jedoch so groß, dass die Rotierbarkeit nicht erfolgen kann.

Weitere Ausführungsformen der Erfindung ergeben sich aus den Unteransprüchen.

Nachfolgend wird die Erfindung anhand von Ausführungsbeispielen beschrieben, die anhand der Abbildung näher erläutert werden.

Hierbei zeigen:
- Fig. 1a: eine seitliche Schnittansicht einer ersten Ausführungsform des erfindungsge- mäßen Nietteils in einer Formvertiefung vor Aufweitung des Abschlussrandes;
- Fig. 1b: eine seitliche Schnittansicht durch die erste Ausführungsform des Nietteils in einer Formvertiefung gemäß Fig. 1a nach Aufweitung des Abschlussrandes;
- Fig. 2: die erste Ausführungsform des Nietteils in einer Formvertiefung gemäß Fig. 1a und 1b nach Aufweitung des Abschlussrandes in einer vergrößerten seitlichen Schnittansicht;
- Fig. 3: eine zweite Ausführungsform des erfindungsgemäßen Nietteils in einer Form- vertiefung in einer seitlichen Schnittansicht;
- Fig. 4: eine der zweiten Ausführungsform des erfindungsgemäßen Nietteils in einer Formvertiefung gemäß Fig. 3 weitgehend entsprechende Ausführungsform mit geringerer Aufweitung des Abschlussrandes;
- Fig. 5: eine dritte Ausführungsform des erfindungsgemäßen Nietteils in einer Form- vertiefung in seitlicher Schnittansicht;
- Fig. 6: eine vierte Ausführungsform des erfindungsgemäßen Nietteils in einer Form- vertiefung in einer seitlichen Schnittansicht;
- Fig. 7: vier verschiedene Aufsichten unterschiedlicher Ausführungsformen des erfin- dungsgemäßen Nietteils in einer Formvertiefung zur Darstellung unterschiedli- cher Außenränder des Grundkörpers;
- Fig. 8: zwei Aufsichten auf die Oberfläche eines eine Formvertiefung umfassenden Bauteils zur Darstellung unterschiedlicher Ausführungsformen der Formvertie- fungen;
- Fig. 9a: eine seitliche Schnittansicht durch ein Nietteil gemäß der Ausführungsform in Figur 1a;
- Fig. 9b: eine seitliche Schnittansicht durch eine weitere Ausführungsform des Nietteils mit zwei Ringerhebungen auf der Außenwand des Schaftes;
- Fig. 10a: eine seitliche Schnittansicht zur Veranschaulichung einer Ausführungsform des Herstellungsverfahrens zur Herstellung eines erfindungsgemäßen Nietteils in einer Formvertiefung vor Aufweitung des Abschlussrandes;
- Fig. 10b: eine seitliche Schnittansicht zur Darstellung der Ausführungsform des Herstel- lungsverfahrens zur Herstellung eines Nietteils in einer Formvertiefung gemäß Fig. 10a nach bereits erfolgter Aufweitung des Abschlussrandes.
- Fig. 11: eine seitliche Schnittansicht durch eine weitere Ausführungsform des Nietteils in einer Formvertiefung mit Verankerungsmittel und Gegenverankerungsmittel zur Halterung des Nietteils;
- Fig. 12: eine seitliche Schnittansicht durch eine weitere Ausführungsform eines Niet- teils mit einem mittels einer Haltesicherung befestigten stiftförmigen Befesti- gungsmittel;
- Fig. 13a: eine seitliche Schnittansicht durch eine weitere Ausführungsform eines Niet- teils mit einem stiftförmigen Befestigungsmittel;
- Fig. 13b: eine seitliche Schnittansicht durch eine weitere Ausführungsform eines Niet- teils mit einem stiftförmigen Befestigungsmittel;
- Fig. 14: eine seitliche Schnittansicht durch eine weitere Ausführungsform des Nietteils in einer Formvertiefung eines als Kontaktlasche ausgeführten Bauteils;
- Fig. 15: eine perspektivische Frontansicht einer weiteren Ausführungsform des Niet- teils in einer Formvertiefung eines als Kontaktlasche ausgeführten Bauteils so- wie eine Ausführungsform, welche aus dem Stand der Technik bekannt ist, zum Vergleich.

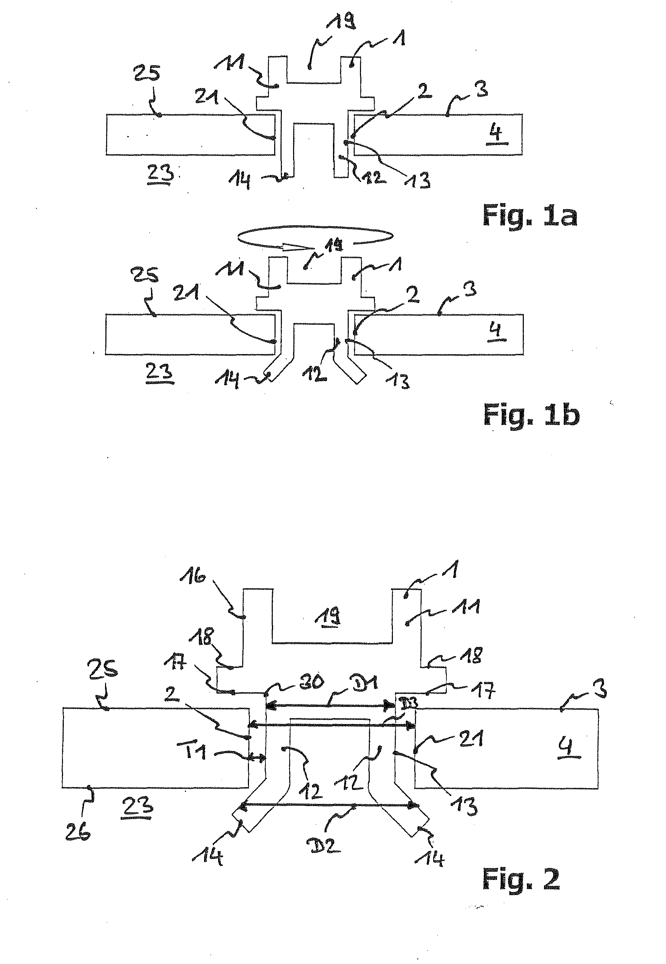

Fig. 1a und 1b betreffen eine erste Ausführungsform des erfindungsgemäßen Nietteils 1 in einer Formvertiefung 2, welche in einer seitlichen Schnittansicht dargestellt ist. Ausführungsgemäß weist das Nietteil 1 einen Grundkörper 11 sowie einen in Verlängerung des Grundkörpers 11 verlaufenden Schaft 12 auf, welcher von dem endständigen Abschlussrand 14 endständig begrenzt ist. Der Schaft 12 sowie der endständige Abschlussrand 14 sind in die Formvertiefung 2 des Bauteils 4 derart eingefügt, dass der Grundkörper 11 auf oder oberhalb des Flächenabschnitts 3 der Oberfläche 25 des Bauteils 4 angeordnet ist, der Abschlussrand 14 hingegen in einem Bereich 23 unterhalb des die Formvertiefung 2 definierenden verengten Bereichs 21. Fig. 1a stellt hierbei einen Zustand dar, wie er vor Aufweiten des Abschlussrandes 14, und somit vor einem Verbinden (Vernieten) des Nietteils 1 mit dem Bauteil 4 vorliegt. Im Vergleich hierzu zeigt Fig. 1b einen Zustand des ausführungsgemäßen Nietteils 1 in einer Formvertiefung 2, wie er nach entsprechendem Aufweiten des Abschlussrandes 14 zur Herstellung einer halternden Verbindung (Vernietung) des Nietteils 1 in dem verengten Bereich 21 der Formvertiefung 2 vorliegt. Die Aufweitung des Abschlussrandes 14 erfolgt gemäß der Darstellung in Fig. 1 so, dass der aufgeweitete Abschlussrand 14 im Wesentlichen in dem unterhalb des verengten Bereiches 21 angeordneten Bereich 23 angeordnet ist. Der Schaft 12 liegt dabei weitgehend innerhalb der Formvertiefung 2 in dem Bauteil 4 und wird von den den verengten Bereich 21 definierenden Wandungen begrenzt.

Nach Aufweitung des Abschlussrandes 14 wird folglich das Nietteil 1 in dem verengten Bereich 21 der Formvertiefung 2 derart gehalten, dass eine Rotation des Nietteils um die in der Zeichenebene liegende zentrale Längssymmetrieachse des Schaftes 12 drehbar angeordnet ist. Die drehbare Anordnung ist in Fig. 1b symbolisch durch einen Teilkreispfeil dargestellt. Hierbei ist anzumerken, dass zur Gewährleistung der Rotierbarkeit bzw. Drehbarkeit des Nietteils 1 in dem verengten Bereich 21 der Formvertiefung 2 etwaige zwischen der Außenwand 13 des Schaftes 12 und den den verengten Bereich 21 definierenden Wandungen auftretenden Reibungskräfte nicht so groß sein dürfen, dass diese durch die Drehung nicht überwunden werden könnten. Weiterhin dürfen auch möglicherweise auftretende Reibungskräfte zwischen dem Abschlussrand 14 und der der Formvertiefung 2 nicht dazu führen, dass eine Rotation des Nietteils 1 in der Formvertiefung 2 verhindert würde.

Das ausführungsgemäße Nietteil 1 weist weiterhin eine Aufnahme 19 in dem Grundkörper 11 auf, welche dafür vorgesehen ist, ein vorliegend nicht weiter gezeigtes Verbindungsteil mit dem Nietteil 1 zu verbinden. Die Verbindung von Nietteil 1 sowie dem nicht gezeigten Verbindungsteil erfolgt dabei vorzugsweise durch Drehen des Nietteils 1 in der Formvertiefung 2 des Bauteils 4.

Fig. 2 zeigt eine vergrößerte seitliche Schnittansicht durch die erste Ausführungsform des erfindungsgemäßen Nietteiles 1 in einer Formvertiefung 2, wie es bereits aus der Fig. 1b bekannt ist. Hierbei werden die einzelnen geometrischen Verhältnisse des Nietteils 1 sowie des Bauteils 4 mit der Formvertiefung 2 näher erläutert. Der Grundkörper 11 des Nietteils 1 weist neben der bereits beschriebenen Aufnahme 19 eine erste Auflagefläche 17 sowie eine zweite Auflagefläche 18 auf. Hierbei ist die erste Auflagefläche 17 auf dem Flächenabschnitt 3 der Oberfläche 25 des Bauteils 4 angeordnet. Je nach Anordnung des Nietteils 1 in der Formvertiefung 2 des Bauteils 4 kann ein direkter mechanischer Kontakt der ersten Auflagefläche 17 mit dem Flächenabschnitt 3 der Oberfläche 25 vorliegen oder auch nicht. Im Falle des Vorliegens eines Flächenkontaktes muss jedoch zur Gewährleistung der Drehbarkeit des Nietteils 1 in der Formvertiefung 2 gesichert sein, dass die auftretenden Reibungskräfte zwischen den Kontaktflächen durch die über die Drehung vermittelten Kräfte überwunden werden können. Überdies verhindert die erste Auflagefläche 17 deren flächige Ausdehnung größer ist als die in der Darstellung der Fig. 2 gezeigte flächige Ausdehnung eines Querschnittes durch den verengten Bereich 21 der Formvertiefung 2 parallel zum Flächenabschnitt 3, ein Durchfallen bzw. Durchrutschen des Nietteils 1 in den Bereich 23 des Bauteils 4. Gleichzeitig verhindert die Aufweitung des Abschlussrandes 14 in dem Bereich 23 ein Durchrutschen des Nietteils 1 auf die der Oberfläche 25 zugewendeten Seite des Bauteils 4. Hierbei weist der im Wesentlichen zylindersymmetrische Schaft 12 einen kleineren Durchmesser D1 auf, als der Durchmesser D3 des verengten Bereiches 21 der Formvertiefung 2. Der Längenunterschied zwischen dem Durchmesser D3 des verengten Bereiches 21 und dem Durchmesser D1 des Schaftes 12 resultiert in einer Toleranz T1. Die Toleranz T1 stellt sich als die Hälfte der Differenz des Durchmessers D3 und des Durchmessers D1 dar. Die Toleranz T1 gewährleistet im Wesentlichen die Rotierbarkeit des Nietteils 1 in dem verengten Bereich 21 der Formvertiefung 2.

Im Vergleich dazu weist der aufgeweitete Abschlussrand 14, welcher ebenfalls Zylindersymmetrie aufweist, einen effektiven Durchmesser D2 auf, welcher zur Sicherung des Nietteils 1 in dem verengten Bereich 21 der Formvertiefung 2 größer sein muss als der Durchmesser D3 des verengten Bereiches 21 der Formvertiefung 2. Als effektiver Durchmesser des aufgeweiteten Abschlussrandes 14 kann beispielsweise die größte Wegstrecke definiert werden, zwischen zwei sich einander entsprechenden und auf dem Abschlussrand 14 einander gegenüberliegenden Punkten. Vorliegend in Fig. 2 wurde der effektive Durchmesser D2 des aufgeweiteten Abschlussrandes 14 als Mittelwert der Wegstrecke aller auf der Außenfläche des Abschlussrandes 14 liegenden Punkte, welche einander diametral gegenüber angeordnet sind, definiert. Die Definition des effektiven Durchmessers D2 des aufgeweiteten Abschlussrandes 14 ist hierbei jedoch weitgehend beliebig, so lange gewährleistet ist, dass aufgrund der Aufweitung des Abschlussrandes des Nietteils 1 im verengten Bereich 21 der Formvertiefung 2 gehalten werden kann.

Ausführungsgemäß weist der Grundkörper 11 des Nietteils 1 einen Außenrand 16 auf, welcher die Grundform des Grundkörpers 11 in Aufsicht auf das Nietteil 1 (vorliegend nicht gezeigt) definiert. So kann beispielsweise durch entsprechende Ausformung des Außenrandes 16 und Beaufschlagung wenigstens eines Teilbereiches dieses Außenrandes mit einer drehenden Kraft durch ein vorliegend nicht weiter gezeigtes Werkzeug das Nietteils 1 in dem verengten Bereich 21 der Formvertiefung 2 rotiert werden. Hierbei stellt die zweite Auflagefläche 18 sicher, dass das vorliegend nicht weiter gezeigte Werkzeug nicht mit der Oberfläche 25 des Flächenabschnittes 3 des Bauteils 4 in Kontakt gelangt.

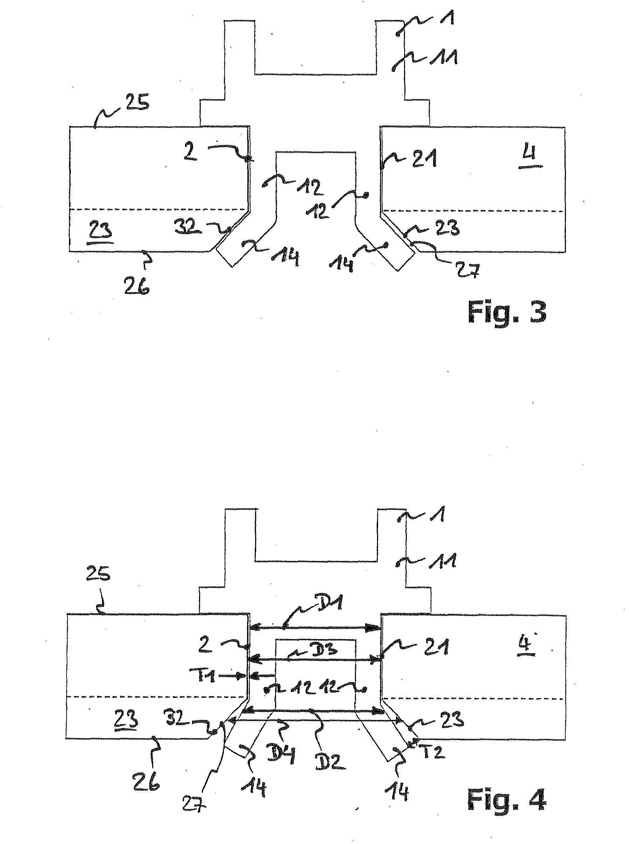

Fig. 3 stellt eine weitere Ausführungsform des Nietteils 1 in einer Formvertiefung 2 in einer Seitenschnittansicht dar, wobei das Nietteil 1 im Wesentlichen das Nietteil 1 der ersten Ausführungsform in den Fig. 1a, 1b und 2 entspricht. Lediglich das Bauteil 4 unterscheidet sich vorliegend von den vorhergehend dargestellten Bauteilen 4. Das Bauteil 4 in der Darstellung der Fig. 3 zeichnet sich einerseits durch den verengten Bereich 21 der Formvertiefung 2 aus, welche auf der der Oberfläche 25 zugewandten Seite des Bauteils 4 angeordnet ist. Unterhalb dieses verengten Bereichs 21 der Formvertiefung 2 ist andererseits ein aufgeweiteter Bereich 27 in dem darunterliegenden Bereich 23 durch eine Schrägung 32 in dem Material des Bauteils 4 angeordnet. Der aufgeweitete Bereich 27 sowie der verengte Bereich 21 sind hierbei konzentrisch zueinander ausfluchtet. Die Schrägung 32 des aufgeweiteten Bereichs 27 entspricht hierbei weitgehend der Schrägung, welche durch den aufgeweiteten Abschlussrand 14 in dem Bereich 23 festgelegt ist. Hierbei ragen auch Teilbereiche des Abschlussrandes 14 auf die Seite der Anordnung von Nietteil in einer Formvertiefung 2, welche auf der Seite liegt, welche der der Oberfläche 25 abgewandten Fläche 26 zugewandt ist. Alternativ hierzu wäre jedoch auch denkbar, dass der Abschlussrand 14 derart ausgebildet ist, dass auch nach erfolgter Aufweitung alle Teilabschnitte des Abschlussrandes 14 innerhalb des Bereiches 23 angeordnet sind.

Fig. 4 zeigt eine im Vergleich zu der Ausführungsform gemäß Fig. 3 weitgehend ähnliche Ausführungsform des Nietteils 1 in einer Formvertiefung 2, wobei jedoch der Abschlussrand 14 nicht so stark aufgeweitet ist, wie in der Ausführungsform gemäß Fig. 3. Auch vorliegend definiert der Durchmesser D1 des Schaftes 12, welcher wieder im Wesentlichen zylindersymmetrisch ausgeführt ist, sowie der Durchmesser D3 des verengten Bereiches 21 der Formvertiefung 2, welcher ebenso im Wesentlichen vorliegend zylindersymmetrisch ausgeführt ist, die Toleranz T1. Im Vergleich zu den Ausführungsformen gemäß Fig. 1a, 1b und 2 des Nietteils 1 in einer Formvertiefung ist jedoch vorliegend die Toleranz T1 geringer, was vorliegend einen formstabileren Sitz (Halterung) des Nietteils 1 in der Formvertiefung 2 gewährleistet.

Zudem definiert die halbe Differenz der wiederum im Wesentlichen zylindersymmetrisch ausgeführten Durchmesser D2 des Abschlussrandes 14 und des Durchmessers D4 des aufgeweiteten Bereiches 27 der Formvertiefung 2 eine zweite Toleranz T2, welche die Außenwände des Abschlussrandes 14 sowie die Wandungen des aufgeweiteten Bereiches 27 beabstandet. Hierbei sei zur Definition des Durchmessers des aufgeweiteten Bereiches 27 der Formvertiefung 2 auf die Definition des Durchmessers D2 des Abschlussrandes 14 weiter oben verwiesen. Je nach Definition der Durchmesser D2 und D4, kann die Toleranz T2 einen minimalen, einen maximalen oder einen zwischen diesen beiden Extrempunkten liegenden Wert annehmen. Die vorliegend dargestellte Toleranz T2 ist folglich nur beispielhaft zu verstehen. Obwohl vorliegend aufgrund der Größenverhältnisse der Toleranz T1 und der Toleranz T2, die Toleranz T2 sowohl für die Stabilität der Halterung des Nietteils 1 in der Formvertiefung 2 als auch für das Rotationsverhalten des Nietteils 1 in der Formvertiefung 2 im Vergleich zur Toleranz T1 keine so gewichtige Bedeutung aufweist, so vermag sich diese Bedeutung bei Vorliegen eines anderen Verhältnisses der Toleranz T1 zur Toleranz T2 anders darstellen.

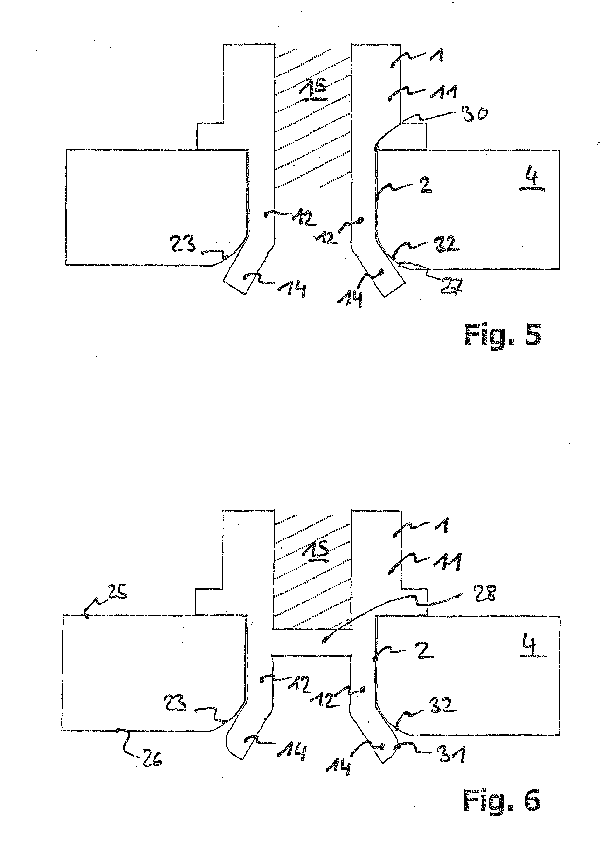

In Fig. 5 ist eine weitere Ausführungsform des Nietteils 1 in einer Formvertiefung 2 eines Bauteils 4 dargestellt, wobei der Grundkörper 11 des Nietteils 1 anstelle einer Aufnahme 19 (vorliegend nicht gezeigt) nun ein Schraubeninnengewinde 15 aufweist. Das Schraubeninnengewinde 15, welches vorliegend nur symbolisch durch gestrichelte Linien dargestellt ist, ist in dem Grundkörper 11 sowie auf den vorliegend nicht weiter bezeichneten Innenwänden des Schaftes 12 angeordnet. Gemäß der vorliegenden Ausführungsform reicht das Schraubeninnengewinde 15 von dem Übergangsbereich 30 zwischen dem Grundkörper 11 und dem Schaft 12 bis etwa zur Hälfte der Längserstreckung des Schaftes 2 parallel zur Drehachse des Nietteils 1. Es steht jedoch im Belieben des Fachmannes, unterschiedliche Teilabschnitte der Innenwandungen sowohl des Grundkörpers 11 als auch des Schaftes 12 mit einem Schraubeninnengewinde zu versehen. Die vorliegende Ausdehnung des Schraubeninnengewindes ist folglich nur beispielhaft zu verstehen.

Weiterhin im Gegensatz zu den Ausführungsformen des Nietteils 1 in der Formvertiefung 2 gemäß der Fig. 3 und 4 ist vorliegend der aufgeweitete Bereich 27 des Bereiches 23 des Bauteils 4 nicht durch eine Schrägung 32 sondern durch eine Rundung 32 definiert.

In Fig. 6 wird eine weitere Ausführungsform des Nietteils 1 in einer Formvertiefung 2 dargestellt, wobei die Ausführungsform des Nietteils 1 im Vergleich zur Ausführungsform des Nietteils 1 in Fig. 5 das Schraubeninnengewinde 15 von dem Grundkörper 11 nur bis zu einem Bodenbereich 28 reicht, welcher weitgehend senkrecht zu den Wandungen des Schaftes 12 liegt. Hierbei liegt es wiederum im Ermessen sowie im Belieben des Fachmanns, den Bodenbereich 28 sowohl im Grundkörper 11 als auch im Schaft 12 vorzusehen. Das Vorsehen eines Bodenbereiches 28 erweist sich dann als vorteilhaft, wenn beispielsweise gewährleistet werden muss, dass ein in das Schraubeninnengewinde 15 eingebrachtes Verbindungsteil nicht bis auf die der abgewandten Fläche 26 zugewandten Seite durchgeführt werden soll.

Weiterhin im Vergleich zu der Ausführungsform des Nietteils 1 in einer Formvertiefung 2 gemäß Fig. 5 weist vorliegend der Abschlussrand 14 eine Abrundung 31 auf, welche auf der Außenwand des Abschlussrandes 14 vorgesehen ist. Die Abrundung 31 erleichtert das Einführen des Nietteils 1 in die Formvertiefung 2 vor allem dann, wenn der effektive Durchmesser D2 des Abschlussrandes 14 und der effektive Durchmesser D3 des verengten Bereiches 21 der Formvertiefung 2 nur eine relativ geringe Toleranz T1 aufweisen.

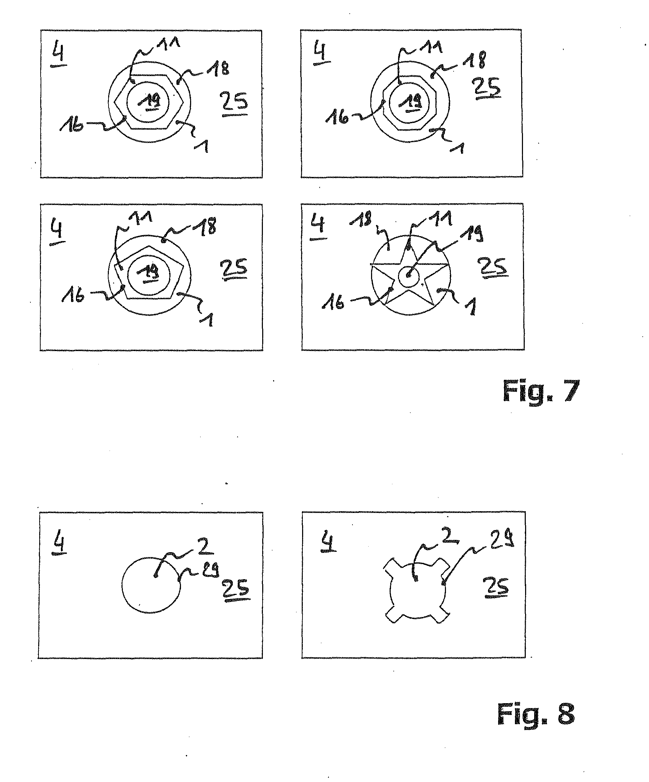

In Fig. 7 werden insgesamt vier unterschiedliche Ausführungsformen des Nietteils in einer Formvertiefung 2 in einer Aufsicht von oben auf den Grundkörper 11 des Nietteils 1 dargestellt. So weist vorliegend der Grundkörper 11 des Nietteils 1 eine zweite Auflagefläche 18 auf, welche kreissymmetrisch ausgeformt ist. Der auf der zweiten Auflagefläche 18 angeordnete Teilbereich des Grundkörpers 11 weist einen Außenrand 16 auf, welcher typischerweise Wandungen aufweist, die senkrecht auf der durch die zweite Auflagefläche 18 definierte Ebene steht. Die Wandungen des Außenrandes 16 weisen in der dargestellten Aufsicht unterschiedliche geometrische Anordnungen auf. Vorliegend sind lediglich beispielhaft dargestellt eine sechskantige Geometrie (links oben), eine achtkantige Geometrie (rechts oben), eine fünfkantige Geometrie (links unten) sowie eine sternförmige Geometrie (rechts unten) der Wandungen des Außenrandes 16. Aufgrund dieser von einer drehsymmetrischen Geometrie abweichenden Anordnung der Wandungen des Außenrandes 16 des Grundkörpers 11 ist es denkbar, zur Rotation des Nietteils 1 in der Formvertiefung 2 ein Werkzeug zu verwenden, welches einen entsprechend geformten Passbereich aufweist, und mittels welchem das Nietteil 1 mit einem Drehmoment beaufschlagt werden kann. Derartige Werkzeuge können im einfachsten Fall größengenaue Sechskantschlüssel sein (zur Drehung der Ausführungsform des Nietteils 1 gemäß der linken oberen Darstellung), können aber auch beliebige weitere Spezialwerkzeuge sein.

Ferner sei darauf hingewiesen, dass in den vorliegend dargestellten Ausführungsformen des Nietteils 1 lediglich eine Aufnahme 19 in den Grundkörpern 11 vorgesehen ist, welche zur Verbindung mit einem nicht weiter gezeigten Verbindungsteil ausgeformt ist. Diese Aufnahme 19 kann, wie es für einen Fachmann offensichtlich ist, ebenfalls durch ein Schraubgewinde, einen Bajonettanschluss, einen Steckanschluss oder auch einen Schraubsteckanschluss ersetzt sein. Fig. 8 zeigt zwei mögliche Ausführungsformen des Bauteils 4 mit einer Formvertiefung 2 von der Seite der Oberfläche 25, wobei der gezeigte Querschnitt der Formvertiefung 2 sowohl kreisförmig (linke Darstellung) als auch eine von der Kreisform abweichende Form (rechte Darstellung) aufweisen kann. Zur Gewährleistung der Rotation eines Nietteils 1 (vorliegend nicht gezeigt) in einer der dargestellten Formvertiefungen 2 ist lediglich entscheidend, dass die Formvertiefungen 2 Laufflächen 29 aufweisen, welche wenigstens abschnittsweise kreisförmig bzw. gekrümmt ausgeformt sind. So ist in der rechten Darstellung der Formvertiefung 2 in Fig. 8 eine Formvertiefung 2 dargestellt, welche insgesamt vier Laufflächen 29 aufweist, deren flächige Verlängerungen zueinander in einer der in der rechten Darstellung der Formvertiefung 2 vergleichbaren Querschnittsform resultieren.

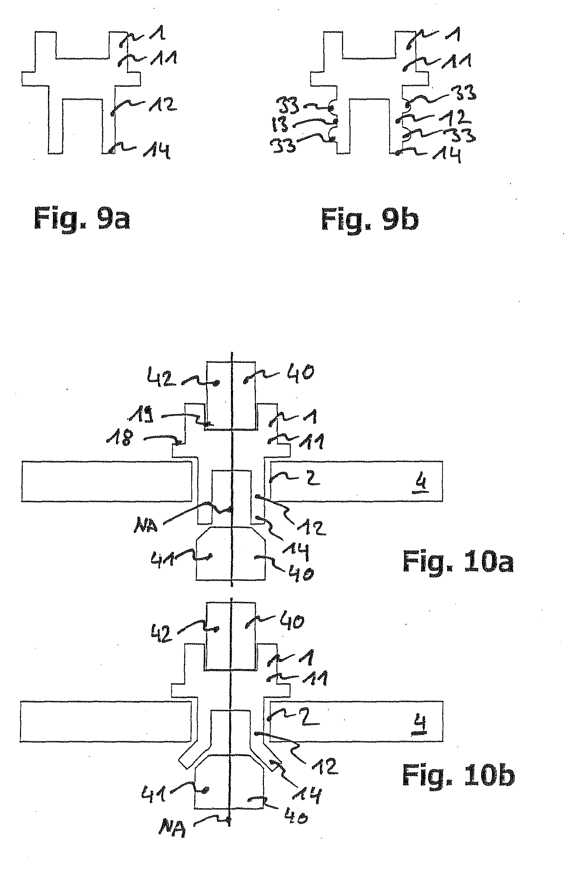

Fig. 9a und 9b zeigen zwei unterschiedliche Ausführungsformen eines Nietteils 1, wie sie zur Herstellung einer erfindungsgemäßen Vorrichtung verwendet werden können. Das in Fig. 9a dargestellte Nietteil 1 entspricht dabei den in den Fig. 1a, 1b, 2, 3 und 4 dargestellten Nietteilen 1, wobei der Abschlussrand 14 im Vergleich zu dem Schaft 12 nicht aufgeweitet ist. Das Nietteil 1 gemäß Fig. 9b entspricht weitgehend der Ausführungsform des Nietteils 1 in Fig. 9a, jedoch weisen die Außenwand 13 des Schaftes 12 zwei Ringerhebungen 33 auf, welche in der dargestellten seitlichen Schnittansicht einen halbkreisförmigen Querschnitt aufweisen. Ist der Schaft 12 sowie der Abschlussrand 14 im Wesentlichen zylindersymmetrisch ausgebildet, so umgeben die Ringerhebungen 33 die Außenwand 13 des Schaftes 12 in einer ringgleichen Struktur. Die halbkreisförmige Ausformung einer Ringerhebung 33 im Querschnitt ist nur beispielhaft zu verstehen und kann durch eine beliebige andere geometrische Form ersetzt werden. Entscheidend ist lediglich, dass die die beiden Ringerhebungen 33 darstellenden Strukturen nach Einbringen des Nietteils 1 in die Formvertiefung 2 sowie Aufweiten des Abschlussrandes 14 die Oberflächen (Außenwandungen) der beiden Ringerhebungen 33 eine verbesserte Rotation des Nietteils 1 in der Formvertiefung 2 aufgrund von reduzierten Reibungskräften ermöglichen. Hierbei ist auch darauf Rücksicht zu nehmen, dass die Anordnung der beiden Ringerhebungen 33 die Stabilität der Halterung des Nietteils 1 in der Formvertiefung 2 nicht wesentlich verschlechtern sollten.

In den Fig. 10a und 10b ist ein Verfahren zur Herstellung eines Nietteils 1 in einer Formvertiefung 2 dargestellt unter Verwendung eines Nietwerkzeuges 40. Die der in den Fig. 1a und 1b dargestellten Ausführungsformen des Nietteils 1 in einer Formvertiefung 2 entsprechenden Ausführungsformen in den Fig. 10a und 10b stellen zwei zeitlich aufeinanderfolgende Schritte eines Nietverfahrens dar, mithilfe dessen der Abschlussrand 14 des Nietteils 1 aufgeweitet wird, d.h. das Nietteil 1 vernietet wird. Hierbei zeigt Fig. 10a einen Zustand des in die Formvertiefung 2 des Bauteils 4 eingefügten Nietteils 1 noch vor der Aufweitung des Abschlussrandes 14. Bei eingefügtem Schaft 12 sowie eingefügtem Abschlussrand 14 des Nietteils 1 in die Formvertiefung 2 des Bauteils 4 wird vorliegend ein Gegenwerkzeug 42 in die Aufnahme 19 des Grundkörpers 11 des Nietteils 1 eingeführt, welches typischerweise ortsfest angeordnet ist. Anstelle der Einführung in die Aufnahme 19 kann das Gegenwerkzeug 42 auch so ausgeformt sein, dass es mit der zweiten Auflagefläche 18 des Grundkörpers 11 in kraftschlüssigem Kontakt steht. In entsprechender Verlängerung zur Richtung einer Nietachse NA befindet sich auf der von dem Grundkörper 11 des Nietteils 1 abgewandten Seite des Nietteils 1 ein Werkzeugteil 41, welches ebenso von dem Nietwerkzeug 40 umfasst ist. Die Nietachse NA entspricht hierbei im einfachsten Fall der Drehachse (Rotationsachse) des Nietteils 1 in der Formvertiefung 2 des Bauteils 4. Das Werkzeugteil 41 ist auf seiner dem Abschlussrand 14 des Nietteils 1 zugewandten Seite derart geformt, dass es bei Kraftbeaufschlagung in den Abschlussrand 14 des Nietteils 1 eingreift sowie diesen unter Kraftbeaufschlagung aufweiten kann. Die Aufweitung des Abschlussrandes 14 ist in Fig. 10b gezeigt. Hierzu wurde das Werkzeugteil 41 in Richtung auf das Gegenwerkzeug 42 des Nietwerkzeuges 40 entlang der Nietachse NA bewegt, so dass der Abschlussrand 14 aufgeweitet wurde. Die Aufweitung des Abschlussrandes 14 ist ausreichend, um ein Entfernen des Nietteils 1 ohne Weiteres aus dem Bauteil 4 zu verhindern.

Das vorliegend dargestellte Nietwerkzeug 40 ist typischerweise eine weggesteuerte und/oder kraftgesteuerte hydraulische Presse, welche als Gegenwerkzeug 42 sowie Werkzeugteil 41 entsprechende Einsätze aufweist. Die Wegsteuerung sowie eine Kraftsteuerung gewährleistet ein kontrolliertes Aufweiten des Abschlussrandes 14, so dass eine optimale Halterung des Nietteils 1 in der Formvertiefung 2 des Bauteils 4 bei gleichzeitiger guter Rotierbarkeit gewährleistet ist. Dabei misst das hydraulische Nietwerkzeug 40 die Wegstrecke, über welche das Werkzeugteil 41 sowie das Gegenwerkzeug 42 gegeneinander bewegt werden. Ist eine Bewegung über eine vorbestimmte Wegstrecke erfolgt, findet keinerlei weitere Kraftbeaufschlagung (Druckbeaufschlagung) des Werkzeugteils 41 statt. Alternativ zu einer weggesteuerten und/oder kraftgesteuerten Aufweitung des Abschlussrandes 14 ist auch eine zeitgesteuerte Aufweitung des Abschlussrandes 14 möglich.

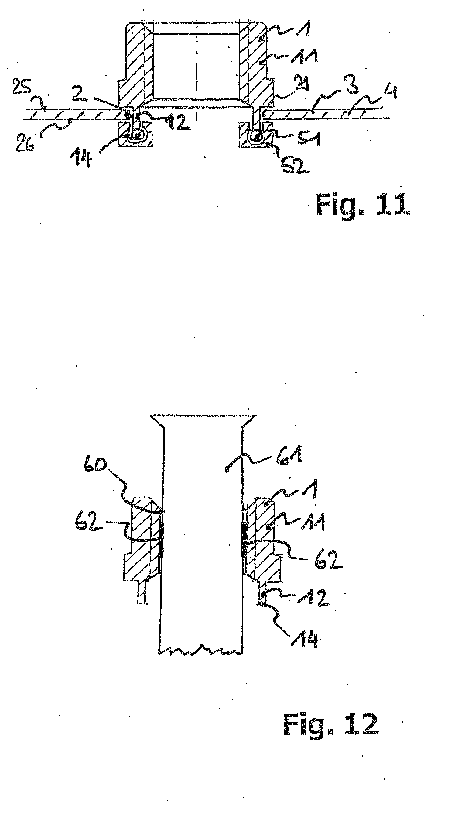

Fig. 11 zeigt eine seitliche Schnittansicht durch eine weitere Ausführungsform des Nietteils 1 in einer Formvertiefung 2 mit Verankerungsmitteln 51 und Gegenverankerungsmittel 52 zur Halterung des Nietteils 1 in der Formvertiefung 2. Der Grundkörper 11 des Nietteils 1 befindet sich hierbei oberhalb des Flächenabschnittes 3 des Bauteiles 4 angeordnet. Auf der Seite der der Oberfläche 25 abgewandten Fläche 26 sind Verankerungsmittel 51 und Gegenverankerungsmittel 52 vorgesehen, welche ein unbeabsichtigtes Entfernen des Nietteils 1 aus der Formvertiefung 2 vermeiden. Die Verankerungsmittel 51 sind als ringförmige Verdickung mit einem teilweise kreisförmigen Querschnitt ausgeführt, welche dem Verlauf des Schaftes 12 folgt und vorliegend auch dem Abschlussrand 14 entspricht. Der Abschlussrandes 14 kann jedoch jede geeignete weitere Ausformung annehmen. Die Verankerungsmittel 51 greifen in eine entsprechend invers ringförmig ausgeführte Nut eines Gegenverankerungsmittels 52 ein, und werden in dieser mittels Klemmkräfte gehalten. Die Gegenverankerungsmittel 52 sind ebenfalls ringförmig mit einem im Wesentlichen rechteckförmigen Querschnitt ausgeführt. Die Ausdehnung der Gegenverankerungsmittel 52 entlang der abgewandten Fläche 26 ist derart bemessen, dass der effektive Durchmesser größer als der effektive Durchmesser D3 des verengten Bereiches 21 der Formvertiefung 2 ist.

Die vorliegende Ausführungsform ist nur beispielhaft zu verstehen. Die Verbindung von Verankerungsmitteln 51 und Gegenverankerungsmitteln 52 kann lösbar mittels einer Klemmverbindung, einer Clipverbindung, einer Steckverbindung, einer Schraubverbindung oder einer sonstigen industrieüblichen lösbaren Verbindungsart ausgeführt sein. Alternativ hierzu kann die Verbindung von Verankerungsmitteln 51 und Gegenverankerungsmitteln 52 aber auch als nicht-lösbare Schweißverbindung, Klebeverbindung, Lötverbindung, Pressverbindung oder als sonst industrieübliche, nicht-lösbare Verbindung ausgeführt sein.

Fig. 12 zeigt eine seitliche Schnittansicht durch eine weitere Ausführungsform eines Nietteils 1 mit einem mittels einer Haltesicherung 62 befestigten stiftförmigen Befestigungsmittel 61, d.h. eines Nietstiftes. Die Ausführungsform des Nietteils 1 entspricht vorliegend weitgehend der Ausführungsform des Nietteils 1 in Figur 11, befindet sich jedoch noch nicht in einer Formvertiefung 2 eines Bauteils 4 eingeführt. Der Aufnahmebereich 60 (funktionell identisch mit der Aufnahme 19) weist ein stiftförmiges Befestigungsmittel 61 auf, welches beispielsweise eine Verbindungsschraube darstellen kann. Damit das stiftförmige Befestigungsmittel 61 nicht aus dem Nietteil 1 unbeabsichtigt entfernt werden kann, etwa während des Transports vor dem Einführen in die Formvertiefung 2 des Bauteils 4, wird diese mittels der Haltesicherung 62 in der Aufnahme 60 des Nietteils 1 gehalten und zeitweilig befestigt. Die Haltesicherung 62 kann hierbei etwa als Kunststoffschicht, insbesondere als Kunststoffring oder als Kunststoffbeschichtung in der Aufnahme 60, ausgeführt sein, welche eine klemmende Befestigung des stiftförmigen Befestigungsmittels 61 gewährleistet. Die Befestigung erfolgt dabei solange, bis das stiftförmige Befestigungsmittel 61 bei Beaufschlagung mit einem Drehmoment gegen das Nietteil 1 verdreht wird, und infolge dieser Drehbewegung die Haltesicherung 62 gelöst und/oder sogar vollkommen zerstört wird.

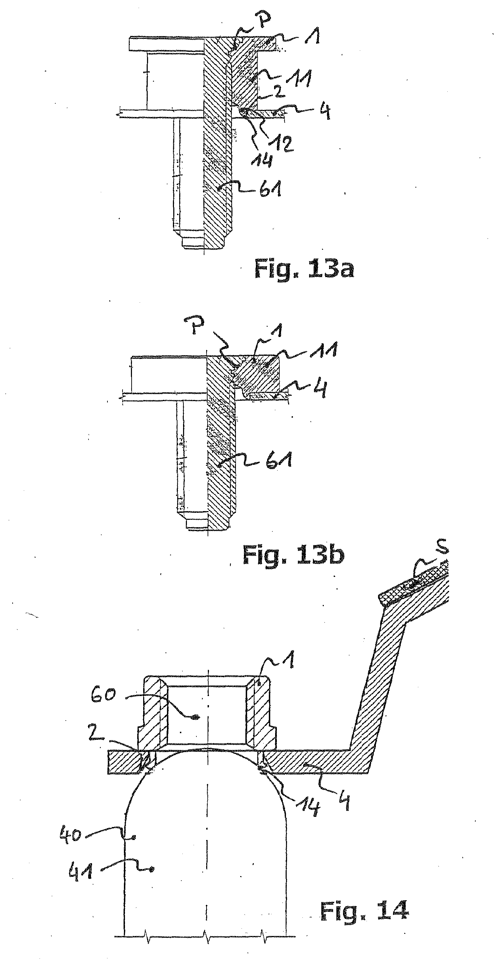

Fig. 13a stellt eine seitliche Schnittansicht durch eine erste Ausführungsform eines Nietteils 1 mit einem stiftförmigen Befestigungsmittel 61 dar. Hierbei ist das stiftförmige Befestigungsmittel 61 mit dem Nietteil 1 unlösbar fest verbunden, wobei das Nietteil in einer Formvertiefung 2 eines Bauteils 4 eingeführt ist und durch Aufweiten des Abschlussrandes 14 in der Formvertiefung 2 rotierbar gehalten wird. Folglich ist auch das stiftförmige Befestigungsmittel 61 rotierbar gehalten und kann in weiteren Schritten verarbeitet oder verwendet werden. Die Verbindung von Nietteil 1 und dem stiftförmigen Befestigungsmittel 61 wird in dem Pressbereich P durch Materialfluss der Kontaktflächen ineinander bewirkt. Alternative hierzu, oder auch zusätzlich hierzu, kann ein Verschrauben, ein Pressklemmen, ein Verschweißen oder eine sonst industrieübliche Verbindungsart zur Verbindung von Nietteil 1 und dem stiftförmigen Verbindungsteil 61 gewählt werden.

Fig. 13b stellt eine seitliche Schnittansicht durch eine zweite Ausführungsform eines Nietteils 1 mit einem stiftförmigen Befestigungsmittel 61 dar. Die zweite Ausführungsform entspricht unter Abwandlung der Geometrie von Nietteil 1 und stiftförmigen Befestigungsmittel 61 der ersten Ausführungsform in Figur 13a. Insbesondere sind Nietteil 1 und das stiftförmige Befestigungsmittel 61 durch Verpressen unter Materialfluss in dem Pressbereich P miteinander unlösbar fest verbunden. Alternativ können Nietteil 1 und Befestigungsmittel 61 auch einstückig geformt sein.

Fig. 14 zeigt eine seitliche Schnittansicht durch eine weitere Ausführungsform des Nietteils 1 in einer Formvertiefung 2 eines als Kontaktlasche ausgeführten Bauteils 4; Zudem wird vorliegend auch noch schematisch ein Werkzeugteil 41 eines Nietwerkzeuges 40 dargestellt, welches den Abschlussrand 14 aufweitet und so das Nietteil 1 zur rotierbaren Halterung in der Formvertiefung 2 mit dem Bauteil 4 vernietet. Das Bauteil 4 ist vorliegend als Kontaktlasche ausgeführt, wie sie etwa in einem Kraftfahrzeug zur Befestigung eines elektrischen Leiters an einer Batterie oder an Gewindebolzen in Verteiler- und/oder Schaltkästen verwendet wird. An der Kontaktlasche 4 ist ein Stromleiteranschluss S angebracht, welcher zur weiteren Stromleitung des mit Strom beaufschlagten Bauteils 4 zur Verfügung steht. Die Spannungsversorgung kann über eine Spannungsquelle erfolgen, deren wenigstens einer Pol dazu ausgebildet ist, mit dem Aufnahmebereich 60 des Nietteils 1 elektrisch kontaktiert und verbunden zu werden. Vorzugsweise ist der Pol als stiftförmige Befestigungsvorrichtung mit Außengewinde ausgeführt, wobei das Außengewinde mit einem in dem Aufnahmebereich 60 des Nietteils 1 angeordneten Innengwinde verschraubt werden kann. Die verschraubten Kontaktflächen erlauben hierbei einen Stromfluss von der stiftförmigen Befestigungsvorrichtung zum Stromleiteranschluss S über das Bauteil 4. Zur ungestörten Stromleitung muss ein guter Flächenkontakt zwischen dem Nietteil 1 und dem Bauteil 4 gewährleistet sein, wobei die Rotierbarkeit des Nietteils durch das Festschrauben auch eingeschränkt werden kann.

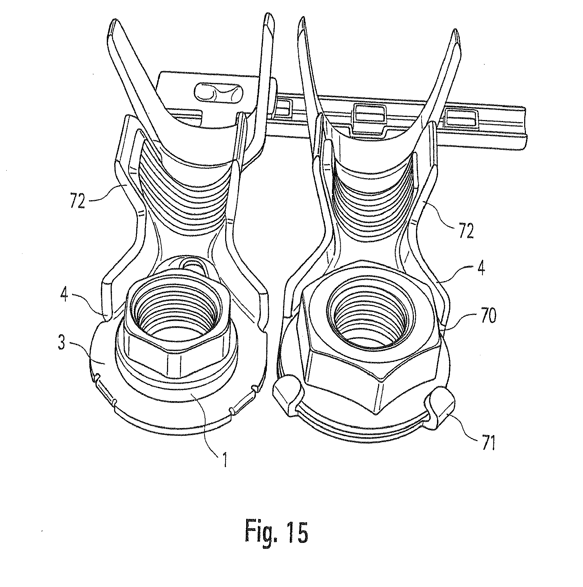

Fig. 15 zeigt eine perspektivische Frontansicht einer weiteren Ausführungsform des Nietteils 1 in einer Formvertiefung 3 eines als Kontaktlasche ausgeführten Bauteils 4 (linke Bildhälfte) sowie eine Ausführungsform, welche aus dem Stand der Technik bekannt ist, zum Vergleich (rechte Bildhälfte). Beide Ausführungsformen unterscheiden sich lediglich durch die Befestigung beider Teile an dem Bauteil 4. Die aus dem Stande der Technik bekannte Ausführungsform weist anstelle eines drehbaren Nietteils 1 eine drehbare Flanschmutter 70 auf, deren Drehbarkeit dadurch gewährleistet wird, dass mehrere Haltekrallen 71 aus umgeformten Material des Bauteiles 4 die Flanschmutter 70 drehbar am Bauteil 4 haltern. Die Haltekrallen 71 sind dabei um die Flanschmutter 70 so angeordnet, dass ein Entfernen der Flanschmutter 70 nur durch Entfernen oder Umformen der Haltekrallen 71 möglich wäre.

Im Vergleich hierzu ist das ausführungsgemäße Nietteil 1 in das Bauteil 4 auf dem Flächenabschnitt 3 drehbar und unlösbar eingenietet. Wie die Ausführungsform in Fig. 14 betrifft auch die vorliegende Ausführungsform ein Bauteil 4, welches als Kontaktlasche ausgeformt ist. An der vorliegenden Kontaktlasche ist zudem eine Kabelhalterung 72 vorgesehen, in welche ein Stromkabel beispielsweise klemmend oder auch klebend fest gehaltert werden kann.

Die obigen Ausführungsformen verdeutlichen noch einmal, dass das erfindungsgemäße Nietteil 1 in den verschiedensten Anwendungen, mit unterschiedlichsten Gewindegrößen und in verschiedenen Formen vorgesehen sein kann.

Zudem sei auf die Möglichkeit hingewiesen, dass durch Einfügen weiterer Elemente, insbesondere durch Einfügen von Zahnscheiben, zwischen das Nietteil 1 und zur Stromleitung vorgesehen Vorrichtungsteilen, der elektrische Kontakt zwischen den Kontaktflächen dieser eine verbesserte Stromleitung bewirkt werden kann. Diese können durch Einkerbungen in den Materialien der Kontaktflächen eine verbesserte Herstellung eines elektrischen Kontakts gewährleisten.

Zudem können noch weitere, oben nicht im Einzelnen beschriebene Elemente mit zusätzlicher Sicherungswirkung in einem Innengewinde des Nietteils 1 vorgesehen sein, die ein Herausrutschen oder unbeabsichtigtes Lösen eines Teils verhindern, welches wenigstens teilweise in das Innengewinde des Nietteils 1 eingeführt ist.

Ferner können auch noch Scheibenvorrichtungen unter dem Grundkörper 11 des Nietteils 1 vorgesehen sein, welche ausgeformt sind, um als optische Anzugskontrolle verwendet zu werden. Derartige Scheibevorrichtungen sind beispielsweise Zahnscheiben.

Weiter kann ein möglicher Stanzgrat der Formvertiefung 2 des Bauteiles 4 in einer ringförmigen Nut im Grundkörper 11 des Nietteils 1 angeordnet werden, so dass ein im Wesentlich planes Anliegen des Grundkörpers 11 auf der Oberfläche 25 des Bauteils 4 gewährleistet ist. Diese Nut ermöglicht zudem auch ein störungsfreies rotieren des Nietteils 1 in der Formvertiefung 2.

Abschließend sei auch darauf hingewiesen, dass die Nietteile 1 in allen Größen hergestellt werden können. Die Herstellungsverfahren können sich entweder auf Drehverfahren, Kalt- oder Warmformverfahren oder aber auch auf alle anderen geeigneten Fertigungsverfahren beziehen. Insbesondere kann der Grundkörper 11 des Nietteils 1 lediglich aus einer einfachen Sechskantmutter ohne erste Auflagefläche 17 und zweite Auflagefläche 18 bestehen, d.h. die Sechskantform des Grundkörpers 11 erstreckt sich bis zur Oberfläche 25 des Bauteils 4.

An dieser Stelle sei darauf hingewiesen, dass alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

### Bezugszeichen:

- 1: Nietteil
- 2: Formvertiefung
- 3: Flächenabschnitt
- 4: Bauteil

- 11: Grundkörper
- 12: Schaft
- 13: Außenwand (Schaft)
- 14: Abschlussrand
- 15: Schraubeninnengewinde
- 16: Außenrand (Grundkörper)
- 17: erste Auflagefläche
- 18: zweite Auflagefläche
- 19: Aufnahme

- 21: verengter Bereich
- 23: Bereich (Bauteil)
- 25: Oberfläche (Bauteil)
- 26: abgewandte Fläche
- 27: aufgeweiteter Bereich
- 28: Bodenbereich
- 29: Laufflächen

- 30: Übergangsbereich (Grundkörper/Schaft)
- 31: Abschrägung/Abrundung (Abschlussrand)
- 32: Schrägung/Rundung (Formvertiefung)
- 33: Ringerhebung

- 40: Nietwerkzeug
- 41: Werkzeugteil
- 42: Gegenwerkzeug
- 43: Fügewerkzeug

- 51: Verankerungsmittel
- 52: Gegenverankerungsmittel

- 60: Aufnahmebereich
- 61: stiftförmige Befestigungsvorrichtung
- 62: Haltesicherung
- 63: Verdrehsicherung

- 70: Flanschmutter
- 71: Haltekralle
- 72: Kabelhalterung

- D1: erster Durchmesser (Schaft)
- D2: zweiter Durchmesser (Abschlussrand)
- D3: dritter Durchmesser (Formvertiefung)
- D4: vierter Durchmesser (Formvertiefung)
- T1: erste Toleranz
- T2: zweite Toleranz
- NA: Nietachse
- P: Pressbereich
- S: Stromleiteranschluss

## Patentansprüche

1. Nietteil (1), insbesondere Nietmutter (1), in einer Formvertiefung (2), umfassend:
- ein Nietteil (1) mit einem Grundkörper (11) sowie einem zylindersymmetrischen und in Verlängerung des Grundkörpers (11) verlaufenden Schaft (12), der eine im Wesentlichen glatte Außenwand (13) eines ersten Durchmessers (D1) aufweist und von einem zylindersymmetrischen, endständigen Abschlussrand (14) eines zweiten Durchmessers (D2) begrenzt wird;
- eine Formvertiefung (2) in einem Flächenabschnitt (3) eines mechanischen Bauteils (4), die mindestens einen verengten, insbesondere zylindersymmetrischen Bereich (21) auf einer der Oberfläche (25) des Bauteils (4) zugewandten Seite aufweist, dessen effektiver Durchmesser einem dritten Durchmesser (D3) entspricht, und der um eine definierte erste Toleranz (T1) größer als der erste Durchmesser (D1) des Schaftes (12) ist, sowie einen in Bezug auf die Oberfläche (25) des Bauteils (4) darunter liegenden Bereich (23),
wobei das Nietteil (1) in der Formvertiefung (2) rotierbar gehalten ist, indem der Schaft (12) von der Oberfläche (25) des Bauteils (4) in das Bauteil (4) eingeführt ist und der endständige Abschlussrand (14) in dem darunter liegenden Bereich (23) des Bauteils (4) aufgeweitet ist, so dass der zweite Durchmesser (D2) des zylindersymmetrischen Abschlussrandes (14) im Wesentlichen größer ist als der dritte Durchmesser (D3) des verengten Bereiches (21) des Bauteils (4).

2. Nietteil (1) in einer Formvertiefung (2) nach Anspruch 1,
**dadurch gekennzeichnet, dass**
der Schaft (12) des Nietteils (1) in den verengten, insbesondere zylindersymmetrischen Bereich (21) der Formvertiefung (2) formschlüssig eingreift.

3. Nietteil (1) in einer Formvertiefung (2) nach einem der vorhergehenden Ansprüche,
**dadurch gekennzeichnet, dass**
das Bauteil (4) aus Kunststoff, insbesondere aus Bakelit, oder aus einem glasfaser-oder kohlefaserverstärktem Material, oder aus Metall, insbesondere aus Stahl ist.

4. Nietteil (1) in einer Formvertiefung (2) nach einem der vorhergehenden Ansprüche,
**dadurch gekennzeichnet, dass**
die Formvertiefung (2) eine Aussparung, insbesondere eine Bohrung in einem plattenförmigen Bauteil (4) ist.

5. Nietteil (1) in einer Formvertiefung (2) nach einem der vorhergehenden Ansprüche,
**dadurch gekennzeichnet, dass**
der in Bezug auf die Oberfläche (25) des Bauteils (4) unter dem verengten, insbesondere zylindersymmetrischen Bereich (21) liegende Bereich (23) einen effektiven vierten Durchmesser (D4) aufweist, der größer als der effektive dritte Durchmesser (D3) des verengten, insbesondere zylindersymmetrischen Bereiches (21) ist, wobei der zylindersymmetrische Abschlussrand (14) des Nietteils (1) in diesen Bereich (23) eingreift.

6. Nietteil (1) in einer Formvertiefung (2) nach Anspruch 5,
**dadurch gekennzeichnet, dass**
der zylindersymmetrische Abschlussrand (14) des Nietteils (1) in die der Oberfläche (25) des plattenförmigen Bauteiles abgewandte Fläche (26) nicht übersteht.

7. Nietteil (1) in einer Formvertiefung (2) nach einem der Ansprüche 5 oder 6,
**dadurch gekennzeichnet, dass**
der Bereich (23) eine Schrägung (32) oder Rundung (32) in Bezug auf die Oberfläche (25) des Bauteiles (4) aufweist.

8. Nietteil (1) in einer Formvertiefung (2) nach einem der vorhergehenden Ansprüche,
**dadurch gekennzeichnet, dass**
der endständige Abschlussrand (14) in dem Bereich (23) des Bauteils (4) durch ein Nietwerkzeug (40) mit im Wesentlichen zylindersymmetrischen Werkzeugteil (41) weggesteuert und/oder kraftgesteuert aufgeweitet ist.

9. Nietteil (1) in einer Formvertiefung (2) nach einem der Ansprüche 6 bis 8,
**dadurch gekennzeichnet, dass**
der endständige Abschlussrand (14) in dem Bereich (23) des Bauteils (4) mit dem effektiven vierten Durchmesser (D4) derart aufgeweitet ist, dass der zylindersymmetrische Abschlussrand (14) im Wesentlichen formschlüssig in den Bereich (23) des Bauteils (4) unter Beibehaltung einer zweiten Toleranz (T2) eingreift.

10. Nietteil (1) in einer Formvertiefung (2) nach einem der vorhergehenden Ansprüche,
**dadurch gekennzeichnet, dass**
die Außenwand (13) des Schaftes (14) und/oder die Formvertiefung (2) des Bauteils (4) oberflächenbehandelt sind, um ein verbessertes Rotieren des Nietteils (1) in der Formvertiefung (2) des Bauteils (4) zu ermöglichen.

11. Nietteil (1) in einer Formvertiefung (2) nach einem der vorhergehenden Ansprüche,
**dadurch gekennzeichnet, dass**
der Grundkörper (11) des Nietteils (1) ein Schraubeninnengewinde (15) aufweist.

12. Nietteil (1) in einer Formvertiefung (2) nach einem der vorhergehenden Ansprüche,
**dadurch gekennzeichnet, dass**
der Grundkörper (11) des Nietteils (1) an dem Übergangsbereich (30) zwischen dem Grundkörper (11) und dem Schaft (14) eine der Oberfläche (25) des Bauteils (4) zugewandte erste Auflagefläche (17) aufweist.

13. Nietteil (1) in einer Formvertiefung (2) nach Anspruch 12,
**dadurch gekennzeichnet, dass**
die erste Auflagefläche (17) des Grundkörpers (11) das Nietteil (1) oberflächenbehandelt ist, um ein verbessertes Rotieren des Nietteils (1) in der Formvertiefung (2) des Bauteils (4) zu ermöglichen.

14. Nietteil (1) in einer Formvertiefung (2) nach einem der vorhergehenden Ansprüche,
**dadurch gekennzeichnet, dass**
der Grundkörper (11) des Nietteils (1) einen nicht rotationssymmetrischen Außenrand (26) aufweist.

15. Nietteil (1) in einer Formvertiefung (2) nach einem der vorhergehenden Ansprüche,
**dadurch gekennzeichnet, dass**
der Grundkörper (11) des Nietteils (1) einen sechskantig geformten Außenrand (16) aufweist.

16. Nietteil (1) in einer Formvertiefung (2) nach einem der Ansprüche 14 oder 15,
**dadurch gekennzeichnet, dass**
der Grundkörper (11) des Nietteils (1) eine von der Oberfläche (25) des Bauteils (4) abgewandte zweite Auflagefläche (18) als Anstoßfläche für ein Werkzeug aufweist.

17. Nietteil (1) in einer Formvertiefung (2) nach einem der vorhergehenden Ansprüche,
**dadurch gekennzeichnet, dass**
die Wanddicke des Schaftes (14) weniger als 1 mm, insbesondere zwischen 0,2 mm und 0,8 mm ist.

18. Nietteil (1) in einer Formvertiefung (2) nach einem der vorhergehenden Ansprüche,
**dadurch gekennzeichnet, dass**
der endständige Abschlussrand (14) des Nietteils (1) eine auf der Außenseite vorgesehene Abschrägung (31) oder Abrundung (31) aufweist, welche das Einfügen des Nietteils (1) in die Formvertiefung (2) des Bauteils (4) erleichtert.

19. Nietteil (1) in einer Formvertiefung (2) nach einem der vorhergehenden Ansprüche,
**dadurch gekennzeichnet, dass**
das Nietteil (1) eine elektrisch leitende Beschichtung zur Erhöhung der Leitfähigkeit des Nietteils (1) auf vorbestimmten Oberflächenabschnitten aufweist.

20. Nietteil (1) in einer Formvertiefung (2) nach einem der vorhergehenden Ansprüche,
**dadurch gekennzeichnet, dass**
das Nietteil (1) wenigstens ein elektrisch nichtleitendes oder elektrisch schlecht leitendes Material umfasst, um Spannungsüberschläge über vorbestimmte Oberflächenabschnitte zu verhindern.

21. Nietteil (1) in einer Formvertiefung (2) nach einem der vorhergehenden Ansprüche,
**dadurch gekennzeichnet, dass**
der zylindersymmetrische Schaft (12) und/oder der endständige Abschlussrand (14), wenigstens einen Schlitz und/oder wenigstens eine Kerbe aufweist.

22. Nietteil (1), insbesondere Nietmutter (1), in einer Formvertiefung (2), erhalten durch:
- Bereitstellen eines Nietteils (1) mit einem Grundkörper (11) sowie einem zylindersymmetrischen und in Verlängerung des Grundkörpers (11) verlaufenden Schaft (12), der eine im Wesentlichen glatte Außenwand (13) eines ersten Durchmessers (D1) aufweist und von einem zylindersymmetrischen, endständigen Abschlussrand (14) eines zweiten Durchmessers (D2) begrenzt wird;
- Bereitstellen eines mechanischen Bauteils (4) mit einer Formvertiefung (2) in einem Flächenabschnitt (3), die mindestens einen verengten, insbesondere zylindersymmetrischen Bereich (21) auf einer der Oberfläche (25) des Bauteils (4) zugewandten Seite aufweist, dessen effektiver Durchmesser einem dritten Durchmesser (D1) entspricht, und der um eine definierte erste Toleranz (T1) größer als der erste Duchmesser (D1) des Schaftes (12) ist, sowie einen in Bezug auf die Oberfläche (25) des Bauteils (4) darunter liegenden Bereich (23) umfasst;
- Einführen des Schaftes (12) von der Oberfläche (25) des Bauteils (4) in das Bauteil (4), wobei der endständige Abschlussrand (14) in dem darunter liegenden Bereich (23) des Bauteils (4) angeordnet ist;
- Aufweiten des endständigen Abschlussrandes (14) in dem darunter liegenden Bereich (23) mit einem Nietwerkzeug (40) mit im Wesentlichen zylindersymmetrischen Werkzeugteil (41) derart, dass der zweite Durchmesser (D2) des zylindersymmetrischen Abschlussrandes (14) im Wesentlichen größer ist als der dritte Durchmesser (D3) des verengten Bereiches (23), und dass das Nietteil (1) in der Formvertiefung (2) rotierbar gehalten ist.

23. Verfahren zur Herstellung eines Nietteils (1), insbesondere einer Nietmutter (1), in einer Formvertiefung (2), welches folgende Schritte umfasst:
- Bereitstellen eines Nietteils (1) mit einem Grundkörper (11) sowie einem zylindersymmetrischen und in Verlängerung des Grundkörpers (11) verlaufenden Schaft (12), der eine im Wesentlichen glatte Außenwand (13) eines ersten Durchmessers (D1) aufweist und von einem zylindersymmetrischen, endständigen Abschlussrand (14) eines zweiten Durchmessers (D2) begrenzt wird;
- Bereitstellen eines mechanischen Bauteils (4) mit einer Formvertiefung (2) in einem Flächenabschnitt (3), die mindestens einen verengten, insbesondere zylindersymmetrischen Bereich (21) auf einer der Oberfläche (25) des Bauteils (4) zugewandten Seite aufweist, dessen effektiver Durchmesser einem dritten Durchmesser (D1) entspricht, und der um eine definierte erste Toleranz (T1) größer als der erste Duchmesser (D1) des Schaftes (12) ist, sowie einen in Bezug auf die Oberfläche (25) des Bauteils -(4) darunter liegenden Bereich (23) umfasst;
- Einführen des Schaftes (12) von der Oberfläche (25) des Bauteils (4) in das Bauteil (4), wobei der endständige Abschlussrand (14) in dem darunter liegenden Bereich (23) des Bauteils (4) angeordnet ist;
- Aufweiten des endständigen Abschlussrandes (14) in dem darunter liegenden Bereich (23) mit einem Nietwerkzeug (40) mit im Wesentlichen zylindersymmetrischem Werkzeugteil (41) derart, dass der zweite Durchmesser (D2) des zylindersymmetrischen Abschlussrandes (14) im Wesentlichen größer ist als der dritte Durchmesser (D3) des verengten Bereiches (23), und dass das Nietteil (1) in der Formvertiefung (2) rotierbar gehalten ist.

24. Verfahren zur Herstellung eines Nietteils (1) in einer Formvertiefung (2) nach Anspruch 20,
**dadurch gekennzeichnet, dass**
der endständige Abschlussrand (14) in dem Bereich (23) des Bauteils (4) durch das Nietwerkzeug (40) mit im Wesentlichen zylindersymmetrischen Werkzeugteil (41) weggesteuert und/oder kraftgesteuert aufgeweitet wird.

25. Verfahren zur Herstellung eines Nietteiles (1) in einer Formvertiefung (2) nach einem der Ansprüche 23 oder 24,
**dadurch gekennzeichnet, dass**
das Nietteil (1) mittels eines Fügewerkzeugs (43) prozesssicher in die Formvertiefung (2) eingesetzt wird.

26. Verfahren zur Herstellung eines Nietteiles (1) in einer Formvertiefung (2) nach einem der Ansprüche 23 bis 25,
**dadurch gekennzeichnet, dass**
vor Einführen des Schaftes (12) in das Bauteil (4) der Schaft (12) und/oder der Abschlussrand (14) mit einer Verdrehsicherung (63) versehen werden, die die Rotierbarkeit des Nietteils (1) in der Formvertiefung (2) zeitweilig unterbindet.

27. Nietteil (1) in einer Formvertiefung (2), umfassend:
- ein Nietteil (1) mit einem Grundkörper (11) sowie einem zylindersymmetrischen und in Verlängerung des Grundkörpers (11) verlaufenden Schaft (12), der eine im Wesentlichen glatte Außenwand (13) eines ersten Durchmessers (D1) aufweist und von einem zylindersymmetrischen, endständigen Abschlussrand (14) eines zweiten Durchmessers (D2) begrenzt wird, welcher Verankerungsmittel (51) aufweist;
- eine Formvertiefung (2) in einem Flächenabschnitt (3) eines mechanischen Bauteils (4), die mindestens einen verengten, insbesondere zylindersymmetrischen Bereich (21) auf einer der Oberfläche (25) des Bauteils (4) zugewandten Seite aufweist, dessen effektiver Durchmesser einem dritten Durchmesser (D3) entspricht, und der um eine definierte erste Toleranz (T1) größer als der erste Durchmesser (D1) des Schaftes (12) ist, sowie einen in Bezug auf die Oberfläche (25) des Bauteils (4) darunter liegenden Bereich (23),
wobei das Nietteil (1) in der Formvertiefung (2) rotierbar gehalten ist, indem der Schaft (12) von der Oberfläche (25) des Bauteils (4) in das Bauteil (4) eingeführt ist und die Verankerungsmittel (51) des endständige Abschlussrandes (14) in dem darunter liegenden Bereich (23) des Bauteils (4) mit entsprechenden Gegenverankerungsmittel (52) in Eingriff gebracht werden, wobei die Gegenverankerungsmittel (52) eine Ausdehnung im Wesentlichen parallel zur Ausdehnung des Flächenabschnittes (3) aufweisen, die im Wesentlichen größer ist als der dritte Durchmesser (D3) des verengten Bereiches (21) des Bauteils (4).

28. Nietteil (1) in einer Formvertiefung (2) nach Anspruch 27,
**dadurch gekennzeichnet, dass**
die Gegenverankerungsmittel (52) mit den Verankerungsmitteln (51) klemmend, mittels einer Schraubverbindung, klebend oder mittels einer Schweißverbindung verbunden sind.

29. Nietteil (1), insbesondere Nietstift (1), in einer Formvertiefung (2), umfassend:
- ein Nietteil (1) mit einem Grundkörper (11) sowie einem zylindersymmetrischen und in Verlängerung des Grundkörpers (11) verlaufenden Schaft (12), der eine im Wesentlichen glatte Außenwand (13) eines ersten Durchmessers (D1) aufweist und von einem zylindersymmetrischen, endständigen Abschlussrand (14) eines zweiten Durchmessers (D2) begrenzt wird,
wobei der Grundkörper (11) und/oder der Schaft (12) einen Aufnahmebereich (60) aufweist, in welchem eine stiftförmige Befestigungsvorrichtung (61) vorgesehen ist;
- eine Formvertiefung (2) in einem Flächenabschnitt (3) eines mechanischen Bauteils (4), die mindestens einen verengten, insbesondere zylindersymmetrischen Bereich (21) auf einer der Oberfläche (25) des Bauteils (4) zugewandten Seite aufweist, dessen effektiver Durchmesser einem dritten Durchmesser (D3) entspricht, und der um eine definierte erste Toleranz (T1) größer als der erste
Durchmesser (D1) des Schaftes (12) ist, sowie einen in Bezug auf die Oberfläche (25) des Bauteils (4) darunter liegenden Bereich (23),
wobei das Nietteil (2) in der Formvertiefung (2) rotierbar gehalten ist, indem der Schaft (12) von der Oberfläche (25) des Bauteils (4) in das Bauteil (4) eingeführt ist und der endständige Abschlussrand (14) in dem darunter liegenden Bereich (23) des Bauteils (4) aufgeweitet ist, so dass der zweite Durchmesser (D2) des zylindersymmetrischen Abschlussrandes (14) im Wesentlichen größer ist als der dritte Durchmesser (D3) des verengten Bereiches (21) des Bauteils (4).

30. Nietteil (1) in einer Formvertiefung (2) nach Anspruch 29,
**dadurch gekennzeichnet, dass**
die stiftförmige Befestigungsvorrichtung (61) in dem Aufnahmebereich (60) mit dem Nietteil (1) fest verbunden, insbesondere verpresst, ist.

31. Nietteil (1) in einer Formvertiefung (2) nach Anspruch 29,
**dadurch gekennzeichnet, dass**
die stiftförmige Befestigungsvorrichtung (61) in dem Aufnahmebereich (60) mit dem Nietteil (1) durch eine klebende oder klemmende Haltesicherung (62) verbunden ist.
